# EUROPEAN PATENT SPECIFICATION

(11) **EP 3 480 247 B1**
(45) Date of publication and mention of the grant of the patent: **08.11.2023**
(21) Application number: 17845745.3
(22) Date of filing: 23.03.2017
(51) Int. Cl.: C08L 1/10, C08K 5/11, C08L 23/08, C08B 3/00

(54) **RESIN COMPOSITION AND RESIN MOLDED ARTICLE**
HARZZUSAMMENSETZUNG UND FORMARTIKEL AUS HARZ
COMPOSITION DE RÉSINE ET ARTICLE MOULÉ EN RÉSINE

(30) Priority: 31.08.2016 JP 2016170158; 31.08.2016 JP 2016170159; 31.08.2016 JP 2016170160; 31.08.2016 JP 2016170161
(43) Date of publication of application: 08.05.2019
(73) Proprietor: FUJIFILM Business Innovation Corp., Minato-ku Tokyo (JP)
(72) Inventor: YAO, Kenji, Minamiashigara-shi Kanagawa 250-0111 (JP)
(74) Representative: Haseltine Lake Kempner LLP
(86) International application number: PCT/JP2017/011879
(87) International publication number: WO 2018/042734

(56) References cited:
- EP-A1- 2 444 457
- JP-A- S5 693 746
- JP-A- 2006 111 858
- JP-A- 2007 119 608
- JP-A- 2008 038 142
- JP-A- 2012 092 155
- JP-A- 2014 123 046
- JP-A- 2014 123 047
- JP-A- 2015 189 831
- US-A1- 2011 319 531
- US-A1- 2016 090 472

## Description

### Technical Field

The present invention relates to a resin composition and a resin molded article.

### Background Art

Conventionally, various thermoplastic resins have been provided and used for various purposes. For example, the thermoplastic resins are used for casings of household electric appliances, various parts of automobiles, office equipment, and electronic appliances.

In recent years, plants-derived resins have been utilized as thermoplastic resins, and cellulose acylate is one of the plant-derived resins known hitherto.

For example, Patent Literature 1 discloses "a resin composition, containing at least: a cellulose ester resin; a nonreactive plasticizer having no functional group capable of reacting with the cellulose ester resin; and a polyolefin-containing polyfunctional elastomer having a polyolefin obtained by polymerizing an olefin having 2 to 4 carbon atoms as a main component and having a plurality of functional groups capable of reacting with the cellulose ester resin".

In addition, Patent Literature 2 discloses "a cellulose ester composition, containing (A) 100 parts by mass of a cellulose ester; (B) 2 to 100 parts by mass of a plasticizer; and (C) 1 to 50 parts by mass of a thermoplastic elastomer having a core-shell structure containing an alkyl (meth)acrylate unit".

### Citation List

### Patent Literature

Patent Literature 1: JP-A-2016-069397
Patent Literature 2: JP-A-2014-084343
   US2016090472 discloses composites comprising a cellulose ester and a polyolefin-containing polyfunctional elastomer and the impact resistance thereof.

### Summary of Invention

### Technical Problem

A first problem of the present invention is to provide a resin composition capable of obtaining a resin molded article excellent in impact resistance and having a high flexural modulus, compared with a case where in a resin composition containing cellulose acylate having a weight average molecular weight of 30,000 to 90,000 and an olefin-(meth)acrylate-glycidyl methacrylate copolymer, a mass ratio Ma/Mb of an amount Ma of a structural unit represented by the following formula (a) to an amount Mb of a structural unit represented by the following formula (b) contained in the copolymer is less than 5 or more than 10.

A second problem of the present invention is to provide a resin composition capable of obtaining a resin molded article excellent in impact resistance and having a high flexural modulus, compared with a case where in a resin composition containing cellulose acylate having a weight average molecular weight of 30,000 to 90,000 and an olefin-(meth)acrylate-(unsaturated-1,2-dicarboxylic anhydride) copolymer, a mass ratio Ma/Mb of a content Ma of a structural unit represented by the following formula (a) to a content Mb of a structural unit represented by the following formula (b) contained in the copolymer is less than 1, or more than 100.

A third problem of the present invention is to provide a resin composition capable of obtaining a resin molded article excellent in impact resistance and having a high flexural modulus, compared with a case where in a resin composition containing cellulose acylate having a weight average molecular weight of 30,000 to 90,000 and an olefin-glycidyl methacrylate copolymer, a content of a structural unit represented by the following formula (b) contained in the copolymer is less than 5 mass% or more than 20 mass% based on the total mass of the copolymer.

A fourth problem of the present invention is to provide a resin composition capable of obtaining a resin molded article excellent in impact resistance and having a high flexural modulus, compared with a case where in a resin composition containing cellulose acylate having a weight average molecular weight of 30,000 to 90,000 and an olefin-alkyl(meth)acrylate copolymer, a content Mb of a structural unit represented by the following formula (a) contained in the copolymer is less than 15 mass% or more than 35 mass% based on the total mass of the copolymer.

### Solution to Problem

The first problem is solved by following means.

[1] A first aspect of the present invention relates to
   a resin composition, containing cellulose acylate having a weight average molecular weight of 30,000 to 90,000 and an olefin-(meth)acrylate-glycidyl methacrylate copolymer in which a mass ratio Ma/Mb of a content Ma of a structural unit represented by the following formula (a) to a content Mb of a structural unit represented by the following formula (b) contained in the copolymer is 5 to 10. 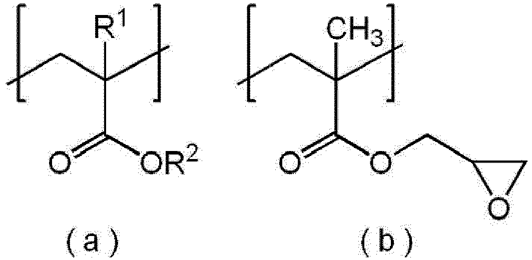 In the formula, R¹ represents a hydrogen atom or a methyl group, and R² represents an alkyl group having 1 to 10 carbon atoms.
[2] In the resin composition according to [1], the olefin-(meth)acrylate-glycidyl methacrylate copolymer may be an ethylene-(meth)acrylate-glycidyl methacrylate copolymer.
[3] In the resin composition according to [1] or [2], the cellulose acylate may have a degree of substitution of 2.0 to 2.5.
[4] In the resin composition according to any one of [1] to [3], the cellulose acylate may have at least an acetyl group.
[5] In the resin composition according to any one of [1] to [4], a content of the copolymer may be 0.5 part by mass to 10 parts by mass based on 100 parts by mass of the cellulose acylate.
[6] In the resin composition according to any one of [1] to [5], an adipate ester-containing compound may be further contained.
[7] Another aspect of the present invention relates to a resin molded article obtained by molding the resin composition according to any one of [1] to [6].
[8] A still another aspect of the present invention relates to a resin molded article, containing a resin obtained by reacting cellulose acylate having a weight average molecular weight of 30,000 to 90,000 and an olefin-(meth)acrylate-glycidyl methacrylate copolymer in which a mass ratio Ma/Mb of a content Ma of a structural unit represented by the following formula (a) to a content Mb of a structural unit represented by the following formula (b) contained in the copolymer is 5 to 10. 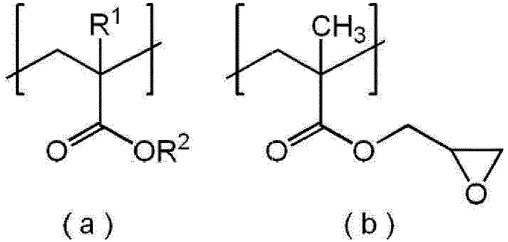 In the formula, R¹ represents a hydrogen atom or a methyl group, and R² represents an alkyl group having 1 to 10 carbon atoms.
[9] In the resin molded article according to [8], the olefin-(meth)acrylate-glycidyl methacrylate copolymer may be an ethylene-(meth)acrylate-glycidyl methacrylate copolymer.
   The second problem is solved by following means.
[10] A yet another aspect of the present invention relates to a resin composition, containing cellulose acylate having a weight average molecular weight of 30,000 to 90,000 and an olefin-(meth)acrylate-(unsaturated-1,2-dicarboxylic anhydride) copolymer in which a mass ratio Ma/Mc of a content Ma of a structural unit represented by the following formula (a) to a content Mb of a structural unit represented by the following formula (c) contained in the copolymer is 1 to 100. 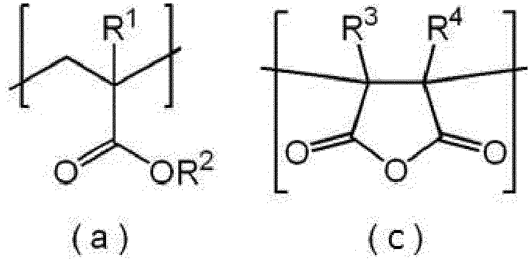 In the formula, R¹ represents a hydrogen atom or a methyl group, R² represents an alkyl group having 1 to 10 carbon atoms, and R³ and R⁴ each independently represent a hydrogen atom or an alkyl group having 1 to 10 carbon atoms.
[11] In the resin composition according to [10], the olefin-(meth)acrylate-(unsaturated-1,2-dicarboxylic anhydride) copolymer may be an ethylene-(meth)acrylate-(unsaturated-1,2-dicarboxylic anhydride) copolymer.
[12] In the resin composition according to [10] or [11], the olefin-(meth)acrylate-(unsaturated-1,2-dicarboxylic anhydride) copolymer may be an olefin-(meth)acrylate-maleic anhydride copolymer.
[13] In the resin composition according to any one of [10] to [12], the cellulose acylate may have a degree of substitution of 2.0 to 2.5.
[14] In the resin composition according to any one of [10] to [13], the cellulose acylate may have at least an acetyl group.
[15] In the resin composition according to any one of [10] to [14], a content of the copolymer may be 0.5 part by mass to 10 parts by mass based on 100 parts by mass of the cellulose acylate.
[16] In the resin composition according to any one of [10] to [15],
   wherein an adipate ester-containing compound may be further contained.
[17] A further another aspect of the present invention relates to a resin molded article obtained by molding the resin composition according to any one of [10] to [16].
[18] A further another aspect of the present invention relates to a resin molded article, containing a resin obtained by reacting cellulose acylate having a weight average molecular weight of 30,000 to 90,000 and an olefin-(meth)acrylate-(unsaturated-1,2-dicarboxylic anhydride) copolymer in which a mass ratio Ma/Mc of a content Ma of a structural unit represented by the following formula (a) to a content Mb of a structural unit represented by the following formula (c) contained in the copolymer is 1 to 100. 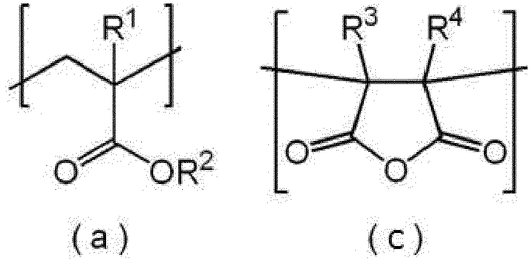 In the formula, R₁ represents a hydrogen atom or a methyl group, R² represents an alkyl group having 1 to 10 carbon atoms, and R³ and R⁴ each independently represent a hydrogen atom or an alkyl group having 1 to 10 carbon atoms.
[19] In the resin molded article according to [18], the olefin-(meth)acrylate-(unsaturated-1,2-dicarboxylic anhydride) copolymer may be an ethylene-(meth)acrylate-(unsaturated-1,2-dicarboxylic anhydride) copolymer.
[20] In the resin molded article according to [18] or [19], the olefin-(meth)acrylate-(unsaturated-1,2-dicarboxylic anhydride) copolymer may be an olefin-(meth)acrylate-maleic anhydride copolymer.
   The third problem is solved by following means.
[21] A further another aspect of the present invention relates to a resin composition containing cellulose acylate having a weight average molecular weight of 30,000 to 90,000 and an olefin-glycidyl methacrylate copolymer in which a content Mb of a structural unit represented by the following formula (b) is 5 mass% to 20 mass% based on the total mass of the copolymer. 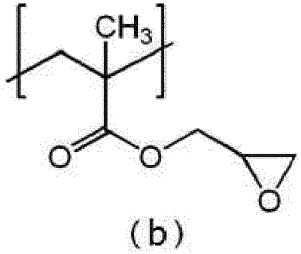
[22] In the resin composition according to [21], the olefin-glycidyl methacrylate copolymer may be an ethylene-glycidyl methacrylate copolymer.
[23] In the resin composition according to [21] or [22], the cellulose acylate may have a degree of substitution of 2.0 to 2.5.
[24] In the resin composition according to any one of [21] to [23], the cellulose acylate may have at least an acetyl group.
[25] In the resin composition according to any one of [21] to [24], a content of the copolymer may be 0.5 part by mass to 10 parts by mass based on 100 parts by mass of the cellulose acylate.
[26] The resin composition according to any one of [21] to [25], an adipate ester-containing compound may be further contained.
[27] A further another aspect of the present invention relates to a resin molded article obtained by molding the resin composition according to any one of [21] to [26].
[28] A further another aspect of the present invention relates to a resin molded article, containing a resin obtained by reacting cellulose acylate having a weight average molecular weight of 30,000 to 90,000 and an olefin-glycidyl methacrylate copolymer in which a content Mb of a structural unit represented by the following formula (b) is 5 mass% to 20 mass% based on the total mass of the copolymer. 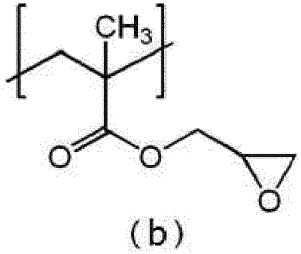
[29] In the resin molded article according to [28],the olefin-glycidyl methacrylate copolymer may be an ethylene-glycidyl methacrylate copolymer.
   The fourth problem is solved by following means.
[30] A further another aspect of the present invention relates to a resin composition containing cellulose acylate having a weight average molecular weight of 30,000 to 90,000 and an olefin-alkyl(meth)acrylate copolymer in which a content Ma of a structural unit represented by the following formula (a) is 15 mass% to 35 mass% based on the total mass of the copolymer. 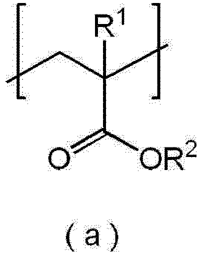 In the formula, R¹ represents a hydrogen atom or a methyl group, and R² represents an alkyl group having 1 to 10 carbon atoms.
[31] In the resin composition according to [30], the olefin-alkyl(meth)acrylate copolymer may be an ethylene-alkyl(meth)acrylate copolymer.
[32] In the resin composition according to [30] or [31], the cellulose acylate may have a degree of substitution of 2.0 to 2.5.
[33] In the resin composition according to any one of [30] to [32], the cellulose acylate may have at least an acetyl group.
[34] In the resin composition according to any one of [30] to [33], a content of the copolymer may be 0.5 part by mass to 10 parts by mass based on 100 parts by mass of the cellulose acylate.
[35] In the resin composition according to any one of [30] to [34], an adipate ester-containing compound may be further contained.
[36] A further another aspect of the present invention relates to a resin molded article obtained by molding the resin composition according to any one of [30] to [35].
[37] A further another aspect of the present invention relates to a resin molded article, containing a resin obtained by reacting cellulose acylate having a weight average molecular weight of 30,000 to 90,000 and an olefin-alkyl(meth)acrylate copolymer in which a content Ma of a structural unit represented by the following formula (a) is 15 mass% to 35 mass% based on the total mass of the copolymer. 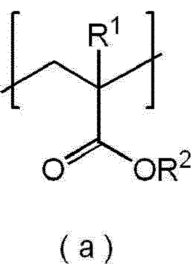 In the formula, R¹ represents a hydrogen atom or a methyl group, and R² represents an alkyl group having 1 to 10 carbon atoms.
[38] In the resin molded article according to [37], the olefin-alkyl(meth)acrylate copolymer may be an ethylene-alkyl(meth)acrylate copolymer.

### Advantageous Effects of Invention

According to the viewpoint of [1], a resin composition capable of obtaining a resin molded article excellent in impact resistance and having a high flexural modulus can be provided, compared with a case where in a resin composition containing cellulose acylate having a weight average molecular weight of 30,000 to 90,000 and an olefin-(meth)acrylate-glycidyl methacrylate copolymer, the mass ratio Ma/Mb of the amount Ma of the structural unit represented by the following formula (a) to the amount Mb of the structural unit represented by the following formula (b) contained in the copolymer is less than 5 or more than 10.

According to the viewpoint of [2], a resin composition capable of obtaining a resin molded article more excellent in impact resistance and having a higher flexural modulus can be provided, compared with a case where the copolymer is an olefin-(meth)acrylate-glycidyl methacrylate copolymer other than an ethylene-(meth)acrylate-glycidyl methacrylate copolymer.

According to the viewpoint of [3], a resin composition capable of obtaining a resin molded article more excellent in impact resistance can be provided, compared with a case where the degree of substitution of the cellulose acylate is less than 2.0 or more than 2.5.

According to the viewpoint of [4], a resin composition capable of obtaining a resin molded article which contains cellulose acetate as the cellulose acylate, is more excellent in impact resistance and has a higher flexural modulus can be provided, compared with a case where the mass ratio Ma/Mb in the copolymer is less than 5 or more than 10.

According to the viewpoint of [5], a resin composition capable of obtaining a resin molded article more excellent in impact resistance can be provided, compared with a case where the content of the copolymer is less than 0.5 part by mass or more than 10 parts by mass based on 100 parts by mass of the cellulose acylate.

According to the viewpoint of [6], a resin composition containing an adipate ester-containing compound, excellent in moldability during resin molding, and being capable of obtaining a resin molded article more excellent in impact resistance can be provided, compared with a case where the mass ratio Ma/Mb in the copolymer is less than 5 or more than 10.

According to the viewpoint of [7], a resin molded article excellent in impact resistance and having a high flexural modulus can be provided, compared with a case of using a resin composition containing cellulose acylate having a weight average molecular weight of 30,000 to 90,000 and an olefin-(meth)acrylate-glycidyl methacrylate copolymer, the mass ratio Ma/Mb of the amount Ma of the structural unit represented by the following formula (a) to the amount Mb of the structural unit represented by the following formula (b) contained in the copolymer is less than 5 or more than 10.

According to the viewpoint of [8], a resin molded article excellent in impact resistance and having a high flexural modulus can be provided, compared with a case where in a resin molded article containing a resin obtained by reacting cellulose acylate having a weight average molecular weight of 30,000 to 90,000 and an olefin-(meth)acrylate-glycidyl methacrylate copolymer, the mass ratio Ma/Mb of the amount Ma of the structural unit represented by the following formula (a) to the amount Mb of the structural unit represented by the following formula (b) contained in the copolymer is less than 5 or more than 10.

According to the viewpoint of [9], a resin molded article more excellent in impact resistance and having a higher flexural modulus can be provided, compared with a case where the copolymer is an olefin-(meth)acrylate-glycidyl methacrylate copolymer other than an ethylene-(meth)acrylate-glycidyl methacrylate copolymer.

According to the viewpoint of [10], a resin composition capable of obtaining a resin molded article excellent in impact resistance and having a high flexural modulus can be provided, compared with a case where in a resin composition containing cellulose acylate having a weight average molecular weight of 30,000 to 90,000 and an olefin-(meth)acrylate-(unsaturated-1,2-dicarboxylic anhydride) copolymer, the mass ratio Ma/Mc of the content Ma of the structural unit represented by the following formula (a) to the content Mc of the structural unit represented by the following formula (c) contained in the copolymer is less than 1 or more than 100.

According to the viewpoint of [11], a resin composition capable of obtaining a resin molded article more excellent in impact resistance and having a higher flexural modulus can be provided, compared with a case where the copolymer is an olefin-(meth)acrylate-(unsaturated-1,2-dicarboxylic anhydride) copolymer other than an ethylene-(meth)acrylate-(unsaturated-1,2-dicarboxylic anhydride) copolymer.

According to the viewpoint of [12], a resin composition capable of obtaining a resin molded article more excellent in impact resistance and having a higher flexural modulus can be provided, compared with a case where the copolymer is an (unsaturated-1,2-dicarboxylic anhydride) copolymer other than an olefin-(meth)acrylate-maleic anhydride copolymer.

According to the viewpoint of [13], a resin composition capable of obtaining a resin molded article more excellent in impact resistance can be provided, compared with a case where the degree of substitution of the cellulose acylate is less than 2.0 or more than 2.5.

According to the viewpoint of [14], a resin composition capable of obtaining a resin molded article which contains cellulose acetate as the cellulose acylate, is more excellent in impact resistance and has a higher flexural modulus can be provided, compared with a case where the mass ratio Ma/Mb in the copolymer is less than 1 or more than 100.

According to the viewpoint of [15], a resin composition capable of obtaining a resin molded article more excellent in impact resistance can be provided, compared with a case where the content of the copolymer is less than 0.5 part by mass or more than 10 parts by mass based on 100 parts by mass of the cellulose acylate.

According to the viewpoint of [16], a resin composition containing an adipate ester-containing compound, excellent in moldability during resin molding, and being capable of obtaining a resin molded article more excellent in impact resistance can be provided, compared with a case where the mass ratio Ma/Mb in the copolymer is less than 1 or more than 100.

According to the viewpoint of [17], a resin molded article excellent in impact resistance and having a high flexural modulus can be provided, compared with a case of using a resin composition containing cellulose acylate having a weight average molecular weight of 30,000 to 90,000 and an olefin-(meth)acrylate-(unsaturated-1,2-dicarboxylic anhydride) copolymer, the mass ratio Ma/Mc of the content Ma of the structural unit represented by the following formula (a) to the content Mc of the structural unit represented by the following formula (c) contained in the copolymer is less than 1 or more than 100.

According to the viewpoint of [18], a resin molded article excellent in impact resistance and having a high flexural modulus can be provided, compared with a case where in a resin molded article containing a resin obtained by reacting cellulose acylate having a weight average molecular weight of 30,000 to 90,000 and an olefin-(meth)acrylate-(unsaturated-1,2-dicarboxylic anhydride) copolymer, a resin composition is used in which the mass ratio Ma/Mc of the content Ma of the structural unit represented by the following formula (a) to the content Mc of the structural unit represented by the following formula (c) contained in the copolymer is less than 1 or more than 100.

According to the viewpoint of [19], a resin molded article more excellent in impact resistance and having a higher flexural modulus can be provided, compared with a case where the copolymer is an olefin-(meth)acrylate-(unsaturated-1,2-dicarboxylic anhydride) copolymer other than an ethylene-(meth)acrylate-(unsaturated-1,2-dicarboxylic anhydride) copolymer.

According to the viewpoint of [20], a resin molded article more excellent in impact resistance and having a higher flexural modulus can be provided, compared with a case where the copolymer is an (unsaturated-1,2-dicarboxylic anhydride) copolymer other than an olefin-(meth)acrylate-maleic anhydride copolymer.

According to the viewpoint of [21], a resin composition capable of obtaining a resin molded article excellent in impact resistance and having a high flexural modulus can be provided, compared with a case where in a resin composition containing cellulose acylate having a weight average molecular weight of 30,000 to 90,000 and an olefin-glycidyl methacrylate copolymer, the content of the structural unit represented by the formula (b) contained in the copolymer is less than 5 mass% or more than 20 mass% based on the total mass of the copolymer.

According to the viewpoint of [22], a resin composition capable of obtaining a resin molded article more excellent in impact resistance and having a higher flexural modulus can be provided, compared with a case where the copolymer is an olefin-glycidyl methacrylate copolymer other than an ethylene-glycidyl methacrylate copolymer.

According to the viewpoint of [23], a resin composition capable of obtaining a resin molded article more excellent in impact resistance can be provided, compared with a case where the degree of substitution of the cellulose acylate is less than 2.0 or more than 2.5.

According to the viewpoint of [24], a resin composition capable of obtaining a resin molded article which contains cellulose acetate as the cellulose acylate, is more excellent in impact resistance and has a higher flexural modulus can be provided, compared with a case where the content of the structural unit represented by the formula (b) contained in the copolymer is less than 5 mass% or more than 20 mass% based on the total mass of the copolymer.

According to the viewpoint of [25], a resin composition capable of obtaining a resin molded article more excellent in impact resistance can be provided, compared with a case where the content of the copolymer is less than 0.5 part by mass or more than 10 parts by mass based on 100 parts by mass of the cellulose acylate.

According to the viewpoint of [26], a resin composition containing an adipate ester-containing compound, excellent in moldability during resin molding, and being capable of obtaining a resin molded article more excellent in impact resistance can be provided, compared with a case where the content of the structural unit represented by the formula (b) contained in the copolymer is less than 5 mass% or more than 20 mass% based on the total mass of the copolymer.

According to the viewpoint of [27], a resin molded article excellent in impact resistance and having a high flexural modulus can be provided, compared with a case of using a resin composition containing cellulose acylate having a weight average molecular weight of 30,000 to 90,000 and an olefin-glycidyl methacrylate copolymer in which the content of the structural unit represented by the formula (b) contained in the copolymer is less than 5 mass% or more than 20 mass% based on the total mass of the copolymer.

According to the viewpoint of [28], a resin molded article excellent in impact resistance and having a high flexural modulus can be provided, compared with a case where in a resin molded article containing a resin obtained by reacting cellulose acylate having a weight average molecular weight of 30,000 to 90,000 and an olefin-glycidyl methacrylate copolymer, the content of the structural unit represented by the formula (b) contained in the copolymer is less than 5 mass% or more than 20 mass% based on the total mass of the copolymer.

According to the viewpoint of [29], a resin molded article containing cellulose acetate as the cellulose acylate, being more excellent in impact resistance and having a higher flexural modulus can be provided, compared with a case where the copolymer is an olefin-glycidyl methacrylate copolymer other than an ethylene-glycidyl methacrylate copolymer.

According to the viewpoint of [30], a resin composition capable of obtaining a resin molded article excellent in impact resistance and having a high flexural modulus can be provided, compared with a case where in a resin composition containing cellulose acylate having a weight average molecular weight of 30,000 to 90,000 and an olefinalkyl(meth)acrylate copolymer, the content of the structural unit represented by the formula (a) contained in the copolymer is less than 15 mass% or more than 35 mass% based on the total mass of the copolymer.

According to the viewpoint of [31], a resin composition capable of obtaining a resin molded article more excellent in impact resistance and having a higher flexural modulus can be provided, compared with a case where the copolymer is an olefin-glycidyl methacrylate copolymer other than an ethylene-glycidyl methacrylate copolymer.

According to the viewpoint of [32], a resin composition capable of obtaining a resin molded article more excellent in impact resistance can be provided, compared with a case where the degree of substitution of the cellulose acylate is less than 2.0 or more than 2.5.

According to the viewpoint of [33], a resin composition capable of obtaining a resin molded article which contains cellulose acetate as the cellulose acylate, is more excellent in impact resistance and has a higher flexural modulus can be provided, compared with a case where the content of the structural unit represented by the formula (a) contained in the copolymer is less than 15 mass% or more than 35 mass% based on the total mass of the copolymer.

According to the viewpoint of [34], a resin composition capable of obtaining a resin molded article more excellent in impact resistance can be provided, compared with a case where the content of the copolymer is less than 0.5 part by mass or more than 10 parts by mass based on 100 parts by mass of the cellulose acylate.

According to the viewpoint of [35], a resin composition containing an adipate ester-containing compound, excellent in moldability during resin molding, and being capable of obtaining a resin molded article more excellent in impact resistance can be provided, compared with a case where the content of the structural unit represented by the formula (a) contained in the copolymer is less than 15 mass% or more than 35 mass% based on the total mass of the copolymer.

According to the viewpoint of [36], a resin molded article excellent in impact resistance and having a high flexural modulus can be provided, compared with a case of using a resin composition containing cellulose acylate having a weight average molecular weight of 30,000 to 90,000 and an olefin-alkyl(meth)acrylate copolymer in which the content of the structural unit represented by the formula (a) contained in the copolymer is less than 15 mass% or more than 35 mass% based on the total mass of the copolymer.

According to the viewpoint of [37], a resin molded article excellent in impact resistance and having a high flexural modulus can be provided, compared with a case where in a resin molded article containing a resin obtained by reacting cellulose acylate having a weight average molecular weight of 30,000 to 90,000 and an olefin-alkyl(meth)acrylate copolymer, the content of the structural unit represented by the formula (a) contained in the copolymer is less than 15 mass% or more than 35 mass% based on the total mass of the copolymer.

According to the viewpoint of [38], a resin molded article more excellent in impact resistance and having a higher flexural modulus can be provided, compared with a case where the copolymer is an olefin-glycidyl methacrylate copolymer other than an ethylene-glycidyl methacrylate copolymer.

Hereinafter, an embodiment which is an example of the present invention is described.

### [Resin Composition]

The resin composition according to the present embodiment contains cellulose acylate having a weight average molecular weight of 30,000 to 90,000 and any one of first to fourth copolymers to be described later.

As described above, the resin composition according to the present embodiment can obtain a resin molded article excellent in impact resistance and having a high flexural modulus. The reasons for this are presumed as follows.

Cellulose has a rigid chemical structure and has an extremely high elastic modulus and heat resistance because of strong intramolecular and intermolecular hydrogen bonding force, but has little thermal fluidity, so that cellulose is not used as plastics.

Thus, a substituent (particularly an acyl group) is attached to the cellulose so as to impart plasticity and lower the melting temperature, so that the thermal fluidity is improved and the cellulose can be used as plastics.

Cellulose acylate has essentially low CO₂ emission and indicates excellent environmental performance. However, for example, in a case where the cellulose acylate is used for casings of copiers and household electrical appliances, intramolecular and intermolecular hydrogen bonds in the cellulose acylate are strong and the rigidity is high, while the impact resistance strength is low.

Patent Literature 2 contains 100 parts by mass of the cellulose ester such as cellulose acylate, 2 to100 parts by mass of the plasticizer, and 1 to 50 parts by mass of the thermoplastic elastomer thermoplastic elastomer having a core-shell structure containing an alkyl (meth)acrylate unit, so that the impact resistance strength is improved, but the rigidity which is the original strength, specifically, the flexural modulus is lowered.

In the present embodiment, even in a case of using the cellulose acylate, the impact resistance strength is improved, and the impact strength is improved and the high flexural modulus which is the original characteristic is ensured. Specifically, due to a resin composition containing cellulose acylate having a weight average molecular weight of 30,000 to 90,000 and an olefin-(meth)acrylate-glycidyl methacrylate copolymer in which the mass ratio Ma/Mb of the content Ma of the structural unit represented by the formula (a) to the content Mb of the structural unit represented by the formula (b) contained in the copolymer is 5 to 10, a resin molded article excellent in impact resistance and having a high flexural modulus can be obtained.

A hydroxyl group or an ester group of the cellulose acylate reacts with a glycidyl group in the copolymer and binds to each other, so that a side chain has a bulky structure containing the structural unit represented by the formula (a), the hydrogen bonding force is relaxed, and the impact resistance strength is improved.

However, when the side chain becomes bulky, the flexural modulus which is the characteristic of the cellulose acylate is usually lowered.

Thus, the hydroxyl group at the molecular terminal also reacts with the glycidyl group, and the molecular chain extension, the bulkiness of the side chain and the hydrogen bond amount are in an appropriate balance by using the cellulose acylate having a weight average molecular weight of 30,000 to 90,000, which is lower than the conventional one and the olefin-(meth)acrylate-glycidyl methacrylate copolymer having a mass ratio Ma/Mb of 5 to 10. Therefore, a resin molded article excellent in impact resistance can be obtained while maintaining a high flexural modulus.

When the weight average molecular weight of the cellulose acylate is less than 30,000, the molecular chain extension is insufficient and the flexural modulus is lowered. When the weight average molecular weight of the cellulose acylate is more than 90,000, the reaction probability between the molecular terminal and the glycidyl group is lowered and the flexural modulus is lowered.

Further, when the mass ratio Ma/Mb of the copolymer is less than 5, the reaction between the cellulose acylate and the copolymer proceeds excessively and the hydrogen bonding property is lowered, thereby lowering the flexural modulus. When the mass ratio Ma/Mb of the copolymer is more than 10, the amount of the copolymer to be reacted is reduced and the impact resistance strength is insufficient.

Hereinafter, details of the resin composition according to the present embodiment are described.

### <Cellulose Acylate>

The resin composition according to the present embodiment contains cellulose acylate having a weight average molecular weight of 30,000 to 90,000.

The cellulose acylate used in the present embodiment is preferably cellulose acylate having a weight average molecular weight of 30,000 to 90,000 and a degree of substitution of 2.0 to 2.5. The cellulose acylate having the above characteristics has a low melting temperature and is high in transparency. When the cellulose acylate having the above characteristics is used for a resin molded article, a resin molded article having high moldability (for example, high injection moldability) and more excellent impact resistance can be obtained.

However, the characteristics of the cellulose acylate used in the present embodiment are not limited except that the weight average molecular weight is 30,000 to 90,000, and are selected according to the intended use of the cellulose acylate.

The cellulose acylate used in the present embodiment has a weight average molecular weight of 30,000 to 90,000, and preferably of 40,000 to 90,000 and more preferably of 60,000 to 90,000, from the viewpoint of the impact resistance of the obtained resin molded article.

The weight average molecular weight of the cellulose acylate in the present embodiment is measured by the following method.

The weight average molecular weight is measured in terms of polystyrene with a gel permeation chromatography apparatus (GPC apparatus: HLC-8320 GPC, column: TSK gel α-M, manufactured by Tosoh Corporation) using a solution of dimethylacetamide / lithium chloride = 90/10.

From the viewpoint of reduction in melting temperature (improvement in moldability) and the impact resistance of the obtained resin molded article, the degree of polymerization of the cellulose acylate according to the present embodiment is preferably 100 to 350, more preferably 150 to 350, and particularly preferably 200 to 350.

Here, the degree of polymerization is determined from the weight average molecular weight by the following procedures.

First, the weight average molecular weight of the cellulose acylate is measured by the above method.

Subsequently, the degree of polymerization of the cellulose acylate is determined by dividing by the structural unit molecular weight of the cellulose acylate. For example, in a case where the substituent of the cellulose acylate is an acetyl group, the structural unit molecular weight is 263 when the degree of substitution is 2.4 and is 284 when the degree of substitution is 2.9.

From the viewpoint of reduction in melting temperature (improvement in moldability) and the impact resistance and flexural modulus of the obtained resin molded article, the degree of substitution of the cellulose acylate according to the present embodiment is preferably 2.0 to 2.5, more preferably 2.1 to 2.5, and particularly preferably 2.2 to 2.5.

Here, the degree of substitution is an index indicating the degree to which the hydroxyl group of cellulose is substituted by an acyl group. That is, the degree of substitution is an index indicating the degree of acylation of the cellulose acylate. Specifically, the degree of substitution means the intramolecular average of the number of substitution in which three hydroxyl groups in a D-glucopyranose unit of the cellulose acylate are substituted with the acyl group.

Further, the degree of substitution is measured from an integrated ratio of the cellulosederived hydrogen and the acyl group-derived peak with ¹H-NMR (JMN-ECA, manufactured by JEOL RESONANCE Co., Ltd.).

The acyl group of the cellulose acylate used in the present embodiment is not particularly limited. From the viewpoint of the impact resistance and flexural modulus of the obtained molded article, preferred is a linear or branched acyl group having 1 to 6 carbon atoms, more preferred is at least one acyl group selected from the group consisting of a formyl group, an acetyl group, a propionyl group, a butyroyl group, a 2-methylpropionyl group, and a pentanoyl group, still more preferred is at least one acyl group selected from the group consisting of an acetyl group and a propionyl group, and particularly preferred is an acetyl group.

In addition, the cellulose acylate used in the embodiment may have one kind of an acyl group alone or two or more kinds thereof.

Specific examples of the cellulose acylate used in the present embodiment include cellulose acetate, cellulose propionate, cellulose butyrate, cellulose acetate propionate, cellulose acetate butyrate, or the like.

The cellulose acylate used in the present embodiment may be used alone or in combination of two or more kinds thereof.

From the viewpoint of the impact resistance and flexural modulus of the obtained resin molded article, the content of the cellulose acylate in the resin composition according to the present embodiment is preferably 50 mass% to 99.9 mass%, more preferably 65 mass% to 99.8 mass%, and particularly preferably 75 mass% to 99.5 mass%, based on the total mass of the resin composition.

It is presumed that the cellulose acylate and the copolymer are not completely reacted with each other but partially reacted with each other in the resin composition according to the present embodiment.

The content of the cellulose acylate contains not only the amount of unreacted cellulose acylate but also the amount of the cellulose acylate component in the reacted resin.

In addition, the resin composition according to the present embodiment preferably contains a resin obtained by reacting the cellulose acylate and the copolymer.

The method for producing the cellulose acylate used in the present embodiment is not particularly limited, and for example, the cellulose acylate is suitably produced by a method of acylating the cellulose and lowering the molecular weight thereof (depolymerization), and optionally deacylating the cellulose, if necessary. The cellulose acylate may be produced by lowering the molecular weight (depolymerization) of commercially available cellulose or the like, such that the above weight average molecular weight is obtained.

### <First Copolymer>

### <Olefin-(meth)acrylate-glycidyl Methacrylate Copolymer>

The resin composition according to the first embodiment contains an olefin-(meth)acrylate-glycidyl methacrylate copolymer, wherein the copolymer has the structural unit represented by the following formula (a) and the structural unit represented by the following formula (b), and the mass ratio Ma/Mb of the content Ma of the structural unit represented by the following formula (a) to the content Mb of the structural unit represented by the following formula (b) in the copolymer is 5 to 10.

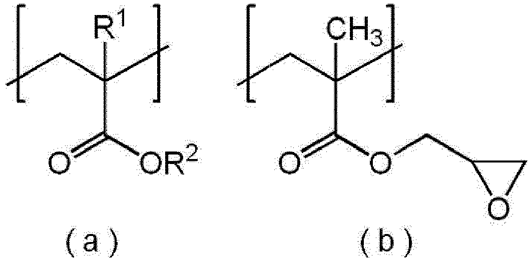

In the formula, R¹ represents a hydrogen atom or a methyl group, and R² represents an alkyl group having 1 to 10 carbon atoms.

The structural unit represented by the formula (a) is preferably a (meth)acrylate-derived structural unit.

R¹ in the formula (a) is preferably a hydrogen atom.

From the viewpoint of the impact resistance and flexural modulus of the obtained resin molded article, R² in the formula (a) is preferably an alkyl group having 1 to 6 carbon atoms, more preferably an alkyl group having 1 to 4 carbon atoms, still more preferably a methyl group or an ethyl group, and particularly preferably a methyl group.

In addition, the alkyl group in R² may be a linear alkyl group or a branched alkyl group.

The copolymer may have one structural unit represented by the formula (a) alone or two or more thereof.

From the viewpoint of the impact resistance of the obtained resin molded article, the content of the structural unit represented by the formula (a) in the copolymer is 10 mass% to 40 mass%, more preferably 12 mass% to 35 mass%, and particularly preferably 15 mass% to 30 mass%, based on the total mass of the copolymer.

The structural unit represented by the formula (b) is preferably a glycidyl methacrylatederived structural unit.

From the viewpoint of the impact resistance of the obtained resin molded article, the content of the structural unit represented by the formula (b) in the copolymer is 0.5 mass% to 15 mass%, more preferably 1 mass% to 12 mass%, and particularly preferably 2 mass% to 10 mass%, based on the total mass of the copolymer.

The mass ratio Ma/Mb of the content Ma of the structural unit represented by the formula (a) to the content Mb of the structural unit represented by the formula (b) contained in the copolymer is 5 to 10, preferably 5 to 9, and more preferably 6 to 8.5, from the viewpoint of the impact resistance and flexural modulus of the obtained resin molded article.

The copolymer has an olefin-derived structural unit.

As the olefin to be copolymerized with the copolymer, preferred is an aliphatic hydrocarbon compound having an ethylenically unsaturated group, more preferred is at least one compound selected from the group consisting of ethylene and α-olefin, particularly preferred is at least one compound selected from the group consisting of ethylene and propylene, and even more preferred is ethylene.

In addition, the copolymer preferably has a structural unit represented by the following formula (d) as the olefin-derived structural unit.

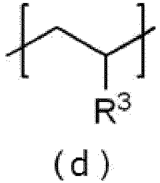

In the formula (d), R³ represents a hydrogen atom or an alkyl group having 1 to 8 carbon atoms.

From the viewpoint of the impact resistance and flexural modulus of the obtained resin molded article, R³ in the formula (d) is preferably a hydrogen atom or an alkyl group having 1 to 6 carbon atoms, more preferably a hydrogen atom or a methyl group, and particularly preferably a hydrogen atom.

In addition, R³ in the formula (d) may be a linear alkyl group or a branched alkyl group, and preferred is a linear alkyl group.

The copolymer may have one structural unit represented by the formula (d) alone or two or more thereof.

From the viewpoint of the impact resistance of the obtained resin molded article, the content of the structural unit represented by the formula (d) in the copolymer is 50 mass% to 89.5 mass%, more preferably 60 mass% to 85 mass%, and particularly preferably 65 mass% to 80 mass%, based on the total mass of the copolymer.

The copolymer may have but preferable do not have other structural units than the structural unit represented by the formula (a), formula (b) or formula (d).

The monomer forming the other structural units is not particularly limited, and examples thereof include known ethylenically unsaturated compounds other than those described above.

Specific examples of the monomer forming the other structural units include a styrene compound, a vinyl ether compound, a vinyl ester compound, and a (meth)acrylate compound other than those described above.

The copolymer may have one of the other structural units alone or two or more thereof.

The content of the other structural units in the copolymer is preferably 10 mass% or less, more preferably 5 mass% or less, still more preferably 1 mass% or less, and particularly preferably 0 mass%, based on the total mass of the copolymer.

The copolymer is preferably an olefin-(meth)acrylate-glycidyl methacrylate ternary copolymer.

In addition, the copolymer is preferably a copolymer containing a structural unit represented by the formula (a), a structural unit represented by the formula (b), and a structural unit represented by the formula (d).

The terminal structure of the copolymer is not particularly limited, various groups may be formed depending on the reaction conditions and the type of the reaction terminator, and examples thereof include a hydrogen atom, a hydroxy group, an ethylenically unsaturated group, an alkoxy group, and an alkylthio group.

From the viewpoint of the impact resistance and flexural modulus of the obtained resin molded article, the weight average molecular weight Mw of the copolymer is preferably 5,000 to 200,000, and more preferably 10,000 to 100,000.

The copolymer used in the present embodiment may be used alone or in combination of two or more kinds thereof.

From the viewpoint of the impact resistance and flexural modulus of the obtained resin molded article, the content of the copolymer in the resin composition according to the present embodiment is preferably 0.1 part by mass to 20 parts by mass, more preferably 0.5 part by mass to 10 parts by mass, and particularly preferably 1 part by mass to 8 parts by mass, based on 100 parts by mass of the cellulose acylate.

### <Second Copolymer>

### <Olefin-(meth)acrylate-(unsaturated-1,2-dicarboxylic anhydride) Copolymer>

The resin composition according to the present embodiment contains an olefin-(meth)acrylate-(unsaturated-1,2-dicarboxylic anhydride) copolymer, wherein the copolymer has the structural unit represented by the following formula (a) and the structural unit represented by the following formula (c), and the mass ratio Ma/Mc of the content Ma of the structural unit represented by the following formula (a) to the content Mc of the structural unit represented by the following formula (c) in the copolymer is 1 to 100.

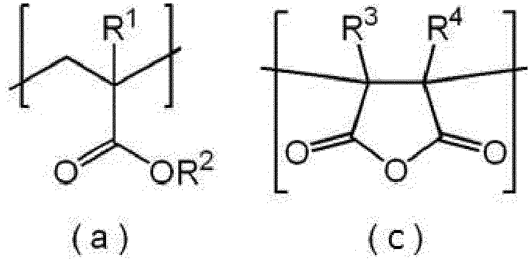

In the formula, R₁ represents a hydrogen atom or a methyl group, R² represents an alkyl group having 1 to 10 carbon atoms, and R³ and R⁴ each independently represent a hydrogen atom or an alkyl group having 1 to 10 carbon atoms.

The structural unit represented by the formula (a) is preferably a (meth)acrylate-derived structural unit.

R¹ in the formula (a) is preferably a hydrogen atom.

From the viewpoint of the impact resistance and flexural modulus of the obtained resin molded article, R² in the formula (a) is preferably an alkyl group having 1 to 6 carbon atoms, more preferably an alkyl group having 1 to 4 carbon atoms, still more preferably a methyl group or an ethyl group, and particularly preferably a methyl group.

In addition, the alkyl group in R² may be a linear alkyl group or a branched alkyl group.

The copolymer may have one structural unit represented by the formula (a) alone or two or more thereof.

From the viewpoint of the impact resistance of the obtained resin molded article, the content of the structural unit represented by the formula (a) in the copolymer is 1 mass% to 40 mass%, more preferably 2 mass% to 35 mass%, and particularly preferably 5 mass% to 30 mass%, based on the total mass of the copolymer.

The structural unit represented the formula (c) is preferably a structural unit derived from an unsaturated-1,2-dicarboxylic anhydride.

From the viewpoint of the impact resistance of the obtained resin molded article, at least one of R³ and R⁴ in the formula (c) is preferably a hydrogen atom, and it is particularly preferable that both of R³ and R⁴ are hydrogen atoms.

From the viewpoint of the impact resistance of the obtained resin molded article, the alkyl group in R³ and R⁴ in the formula (c) is preferably an alkyl group having 1 to 6 carbon atoms, more preferably an alkyl group having 1 to 4 carbon atoms, still more preferably a methyl group or an ethyl group, and particularly preferably a methyl group.

In addition, the alkyl group in R³ and R⁴ may be a linear alkyl group or a branched alkyl group. Further, R³ and R⁴ may be bonded to each other to form a ring structure. The ring structure is preferably a 5-membered ring structure or a 6-membered ring structure.

The copolymer may have one structural unit represented by the formula (c) alone or two or more thereof.

From the viewpoint of the impact resistance of the obtained resin molded article, the content of the structural unit represented by the formula (c) in the copolymer is 0.1 mass% to 10 mass%, more preferably 0.3 mass% to 6.5 mass%, and particularly preferably 1.0 mass% to 5.0 mass%, based on the total mass of the copolymer.

The mass ratio Ma/Mc of the content Ma of the structural unit represented by the formula (a) to the content Mb of the structural unit represented by the formula (c) contained in the copolymer is 1 to 100, preferably 1 to 50, more preferably 1 to 30, and still more preferably 1.5 to 10, from the viewpoint of the impact resistance and flexural modulus of the obtained resin molded article.

The copolymer has an olefin-derived structural unit.

As the olefin to be copolymerized with the copolymer, preferred is an aliphatic hydrocarbon compound having an ethylenically unsaturated group, more preferred is at least one compound selected from the group consisting of ethylene and α-olefin, particularly preferred is at least one compound selected from the group consisting of ethylene and propylene, and even more preferred is ethylene.

In addition, the copolymer preferably has a structural unit represented by the following formula (e) as the olefin-derived structural unit.

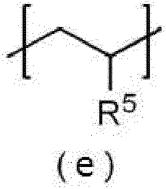

In the formula, R⁵ represents a hydrogen atom or an alkyl group having 1 to 8 carbon atoms.

From the viewpoint of the impact resistance and flexural modulus of the obtained resin molded article, R⁵ in the formula (e) is preferably a hydrogen atom or an alkyl group having 1 to 6 carbon atoms, more preferably a hydrogen atom or a methyl group, and particularly preferably a hydrogen atom.

In addition, the alkyl group in R⁵ may be a linear alkyl group or a branched alkyl group, and preferred is a linear alkyl group.

The copolymer may have one structural unit represented by the formula (e) alone or two or more thereof.

From the viewpoint of the impact resistance of the obtained resin molded article, the content of the structural unit represented by the formula (e) in the copolymer is 50 mass% to 98.9 mass%, more preferably 60 mass% to 95 mass%, and particularly preferably 65 mass% to 92 mass%, based on the total mass of the copolymer.

The copolymer may have but preferable do not have other structural units than the structural unit represented by the formula (a), formula (c) or formula (e).

The monomer forming the other structural units is not particularly limited, and examples thereof include known ethylenically unsaturated compounds other than those described above.

Specific examples of the monomer forming the other structural units include a styrene compound, a vinyl ether compound, a vinyl ester compound, and a (meth)acrylate compound other than those described above.

The copolymer may have one of the other structural units alone or two or more thereof.

The content of the other structural units in the copolymer is preferably 10 mass% or less, more preferably 5 mass% or less, still more preferably 1 mass% or less, and particularly preferably 0 mass%, based on the total mass of the copolymer.

The copolymer is preferably an olefin-(meth)acrylate-(unsaturated-1,2-dicarboxylic anhydride) ternary copolymer.

In addition, the copolymer is preferably a copolymer containing a structural unit represented by the formula (a), a structural unit represented by the formula (c), and a structural unit represented by the formula (e).

The terminal structure of the copolymer is not particularly limited, various groups may be formed depending on the reaction conditions and the type of the reaction terminator, and examples thereof include a hydrogen atom, a hydroxy group, an ethylenically unsaturated group, an alkoxy group, and an alkylthio group.

From the viewpoint of the impact resistance and flexural modulus of the obtained resin molded article, the weight average molecular weight Mw of the copolymer is preferably 5,000 to 200,000, and more preferably 10,000 to 100,000.

The copolymer used in the present embodiment may be used alone or in combination of two or more kinds thereof.

From the viewpoint of the impact resistance and flexural modulus of the obtained resin molded article, the content of the copolymer in the resin composition according to the present embodiment is preferably 0.1 part by mass to 20 parts by mass, more preferably 0.5 part by mass to 10 parts by mass, and particularly preferably 1 part by mass to 8 parts by mass, based on 100 parts by mass of the cellulose acylate.

### <Third Copolymer>

### <Olefin-glycidyl Methacrylate Copolymer>

The resin composition according to the present embodiment contains an olefin-glycidyl methacrylate copolymer, and in the copolymer, the content of the structural unit represented by the following formula (b) is 5 mass% to 20 mass% based on the total mass of the copolymer.

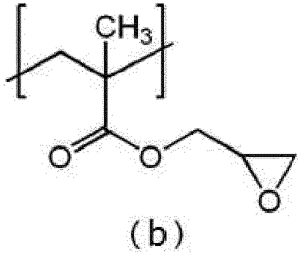

The structural unit represented by the formula (b) is preferably a glycidyl methacrylatederived structural unit.

The content of the structural unit represented by the formula (b) in the copolymer is 5 mass% to 20 mass%, and is preferably 7 mass% to 20 mass%, more preferably 10 mass% to 20 mass%, and particularly preferably 10 mass% to 18 mass%, based on the total mass of the copolymer, from the viewpoint of the impact resistance and flexural modulus of the obtained resin molded article.

The copolymer has an olefin-derived structural unit.

As the olefin to be copolymerized with the copolymer, preferred is an aliphatic hydrocarbon compound having an ethylenically unsaturated group, more preferred is at least one compound selected from the group consisting of ethylene and α-olefin, particularly preferred is at least one compound selected from the group consisting of ethylene and propylene, and even more preferred is ethylene.

In addition, the copolymer preferably has a structural unit represented by the following formula (f) as the olefin-derived structural unit.

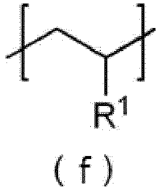

In the formula, R¹ represents a hydrogen atom or an alkyl group having 1 to 8 carbon atoms.

From the viewpoint of the impact resistance and flexural modulus of the obtained resin molded article, R¹ in the formula (f) is preferably a hydrogen atom or an alkyl group having 1 to 6 carbon atoms, more preferably a hydrogen atom or a methyl group, and particularly preferably a hydrogen atom.

In addition, the alkyl group in R¹ may be a linear alkyl group or a branched alkyl group, and preferred is a linear alkyl group.

The copolymer may have one structural unit represented by the formula (f) alone or two or more thereof.

From the viewpoint of the impact resistance of the obtained resin molded article, the content of the structural unit represented by the formula (f) in the copolymer is 70 mass% to 95 mass%, more preferably 80 mass% to 93 mass%, and particularly preferably 82 mass% to 90 mass%, based on the total mass of the copolymer.

The copolymer may have but preferable do not have other structural units than the structural unit represented by the formula (b) or formula (f).

The monomer forming the other structural units is not particularly limited, and examples thereof include known ethylenically unsaturated compounds other than those described above.

Specific examples of the monomer forming the other structural units include a styrene compound, a vinyl ether compound, a vinyl ester compound, and a (meth)acrylate compound other than glycidyl methacrylate.

The copolymer may have one of the other structural units alone or two or more thereof.

The content of the other structural units in the copolymer is preferably 10 mass% or less, more preferably 5 mass% or less, still more preferably 1 mass% or less, and particularly preferably 0 mass%, based on the total mass of the copolymer.

The copolymer is preferably an olefin-glycidyl methacrylate binary copolymer.

In addition, the copolymer is preferably a copolymer containing a structural unit represented by the formula (b), and a structural unit represented by the formula (f).

The terminal structure of the copolymer is not particularly limited, various groups may be formed depending on the reaction conditions and the type of the reaction terminator, and examples thereof include a hydrogen atom, a hydroxy group, an ethylenically unsaturated group, an alkoxy group, and an alkylthio group.

From the viewpoint of the impact resistance and flexural modulus of the obtained resin molded article, the weight average molecular weight Mw of the copolymer is preferably 5,000 to 200,000, and more preferably 10,000 to 100,000.

The copolymer used in the present embodiment may be used alone or in combination of two or more kinds thereof.

From the viewpoint of the impact resistance and flexural modulus of the obtained resin molded article, the content of the copolymer in the resin composition according to the present embodiment is preferably 0.1 part by mass to 20 parts by mass, more preferably 0.5 part by mass to 10 parts by mass, and particularly preferably 1 part by mass to 8 parts by mass, based on 100 parts by mass of the cellulose acylate.

### <Fourth Copolymer>

### <Olefin-alkyl(meth)acrylate Copolymer>

The resin composition according to the present embodiment contains an olefin-alkyl(meth)acrylate copolymer, and in the copolymer, the content of the structural unit represented by the following formula (a) is 15 mass% to 35 mass% based on the total mass of the copolymer.

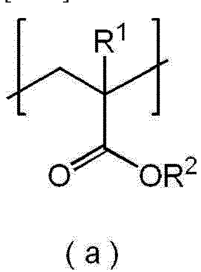

In the formula, R¹ represents a hydrogen atom or a methyl group, and R² represents an alkyl group having 1 to 10 carbon atoms.

The structural unit represented by the formula (a) is preferably a (meth)acrylate-derived structural unit.

R¹ in the formula (a) is preferably a hydrogen atom.

From the viewpoint of the impact resistance and flexural modulus of the obtained resin molded article, R² in the formula (a) is preferably an alkyl group having 1 to 6 carbon atoms, more preferably an alkyl group having 1 to 4 carbon atoms, still more preferably a methyl group or an ethyl group, and particularly preferably a methyl group. In addition, from the viewpoint of the moldability and flexural modulus of the obtained resin molded article, R² is more preferably an alkyl group having 1 to 6 carbon atoms, and still more preferably an alkyl group having 1 to 4 carbon atoms.

In addition, the alkyl group in R² may be a linear alkyl group or a branched alkyl group.

The copolymer may have one structural unit represented by the formula (a) alone or two or more thereof.

The content of the structural unit represented by the formula (a) in the copolymer is 15 mass% to 35 mass%, and is more preferably 18 mass% to 35 mass%, and particularly preferably 20 mass% to 32 mass%, based on the total mass of the copolymer, from the viewpoint of the impact resistance and flexural modulus of the obtained resin molded article.

The copolymer has an olefin-derived structural unit.

As the olefin to be copolymerized with the copolymer, preferred is an aliphatic hydrocarbon compound having an ethylenically unsaturated group, more preferred is at least one compound selected from the group consisting of ethylene and α-olefin, particularly preferred is at least one compound selected from the group consisting of ethylene and propylene, and even more preferred is ethylene.

In addition, the copolymer preferably has a structural unit represented by the following formula (d) as the olefin-derived structural unit.

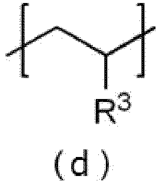

In the formula (d), R³ represents a hydrogen atom or an alkyl group having 1 to 8 carbon atoms.

From the viewpoint of the impact resistance and flexural modulus of the obtained resin molded article, R³ in the formula (d) is preferably a hydrogen atom or an alkyl group having 1 to 6 carbon atoms, more preferably a hydrogen atom or a methyl group, and particularly preferably a hydrogen atom.

In addition, R³ in the formula (d) may be a linear alkyl group or a branched alkyl group, and preferred is a linear alkyl group.

The copolymer may have one structural unit represented by the formula (d) alone or two or more thereof.

From the viewpoint of the impact resistance and flexural modulus of the obtained resin molded article, the content of the structural unit represented by the formula (d) in the copolymer is 55 mass% to 85 mass%, more preferably 65 mass% to 85 mass%, and particularly preferably 68 mass% to 80 mass%, based on the total mass of the copolymer.

The copolymer may have but preferable do not have other structural units than the structural unit represented by the formula (a) or formula (d).

The monomer forming the other structural units is not particularly limited, and examples thereof include known ethylenically unsaturated compounds other than those described above.

Specific examples of the monomer forming the other structural units include a styrene compound, a vinyl ether compound, a vinyl ester compound, and a (meth)acrylate compound other than those described above.

The copolymer may have one of the other structural units alone or two or more thereof.

The content of the other structural units in the copolymer, based on the total mass of the copolymer, is preferably 10 mass% or less, more preferably 5 mass% or less, still more preferably 1 mass% or less, and particularly preferably the copolymer does not contain the other structural units.

The copolymer is preferably an olefin-alkyl(meth)acrylate binary copolymer.

In addition, the copolymer is preferably a copolymer containing a structural unit represented by the formula (a), and a structural unit represented by the formula (d).

The terminal structure of the copolymer is not particularly limited, various groups may be formed depending on the reaction conditions and the type of the reaction terminator, and examples thereof include a hydrogen atom, a hydroxy group, an ethylenically unsaturated group, an alkoxy group, and an alkylthio group.

From the viewpoint of the impact resistance and flexural modulus of the obtained resin molded article, the weight average molecular weight Mw of the copolymer is preferably 5,000 to 200,000, and more preferably 10,000 to 100,000.

The copolymer used in the present embodiment may be used alone or in combination of two or more kinds thereof.

From the viewpoint of the impact resistance and flexural modulus of the obtained resin molded article, the content of the copolymer in the resin composition according to the present embodiment is preferably 0.1 part by mass to 20 parts by mass, more preferably 0.5 part by mass to 10 parts by mass, and particularly preferably 1 part by mass to 8 parts by mass, based on 100 parts by mass of the cellulose acylate.

The resin composition according to the present embodiment may contain a plasticizer, other components, or the like, if necessary.

### <Plasticizer>

From the viewpoint of the moldability and impact resistance of the obtained resin molded article, the resin composition according to the present embodiment preferably contains a plasticizer.

From the viewpoint of the flexural modulus of the obtained resin molded article, the resin composition according to the present embodiment preferably contains no plasticizer.

Examples of the plasticizer include an adipate ester-containing compound, a polyether ester compound, a sebacate ester compound, a glycol ester compound, an acetate ester, a dibasic acid ester compound, a phosphate ester compound, a phthalate ester compound, camphor, a citrate ester, a stearate ester, a metal soap, a polyol, a polyalkylene oxide, or the like.

Among these, an adipate ester-containing compound and a polyether ester compound are preferred, and an adipate ester-containing compound is more preferred.

### -Adipate Ester-containing Compound-

The adipate ester-containing compound (compound containing an adipate ester) is a compound of an adipate ester alone, or a mixture of an adipate ester and a component other than an adipate ester (a compound different from the adipate ester). However, the adipate ester-containing compound preferably contains 50 mass% or more of the adipate ester based on all components.

Examples of the adipate ester include an adipate diester and an adipate polyester. Specifically, examples include an adipate diester represented by the following general formula (AE-1) and an adipate polyester represented by the following general formula (AE-2).

### General Formula (AE-1)

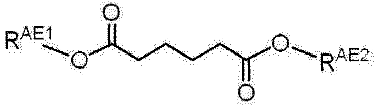

### General Formula (AE-2)

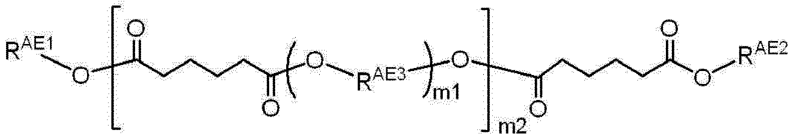

In the general formula (AE-1) and general formula (AE-2), R^{AE1} and R^{AE2} independently represent an alkyl group or a polyoxyalkyl group [-(C_{X}H_{2X}-O)_{y}-R^{A1}] (Here, R^{A1} represents an alkyl group, x represents an integer of 1 to 10, and y represents an integer of 1 to 10.).

R^{AE3} represents an alkylene group.
m1 represents an integer of 1 to 20.
m2 represents an integer of 1 to 10.

In the general formula (AE-1) and general formula (AE-2), the alkyl group represented by R^{AE1} and R^{AE2} is preferably an alkyl group having 1 to 6 carbon atoms, and more preferably an alkyl group having 1 to 4 carbon atoms. The alkyl group represented by R^{AE1} and R^{AE2} may be linear, branched or cyclic, but is preferably linear or branched.

In the polyoxyalkyl group [-(CₓH_{2X}-O)_{y}-R^{A1}] represented by R^{AE1} and R^{AE2} in the general formula (AE-1) and general formula (AE-2), the alkyl group represented by R^{A1} is preferably an alkyl group having 1 to 6 carbon atoms, and more preferably an alkyl group having 1 to 4 carbon atoms. The alkyl group represented by R^{A1} may be linear, branched or cyclic, but is preferably linear or branched.

In the general formula (AE-2), the alkylene group represented by R^{AE3} is preferably an alkylene group having 1 to 6 carbon atoms, and more preferably an alkylene group having 1 to 4 carbon atoms. The alkylene group may be linear, branched or cyclic, but is preferably linear or branched.

In the general formula (AE-1) and general formula (AE-2), the group represented by each symbol may be substituted with a substituent. Examples of the substituent include an alkyl group, an aryl group, a hydroxyl group, or the like.

The adipate ester preferably has a molecular weight (or a weight average molecular weight) of 200 to 5,000, and more preferably from 300 to 2,000. The weight average molecular weight is a value measured according to the above-mentioned method for measuring the weight average molecular weight of the cellulose acylate.

Specific examples of the adipate ester-containing compound are shown in the Table 1 below, but the present invention is not limited thereto.

**[Table 1]**

| | Substance name | Product name | Manufacturer |
|---|---|---|---|
| ADP1 | Adipate diester | Daifatty 101 | DAIHACHI CHEMICAL |
| ADP2 | Adipate diester | Adekasizer RS-107 | ADEKA |
| ADP3 | Adipate polyester | Polisizer W-230-H | DIC |

### -Polyether Ester Compound-

Specific examples of the polyether ester compound include a polyether ester compound represented by the general formula (EE).

### General Formula (EE)

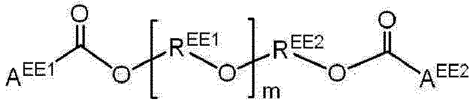

In general formula (EE), R^{EE1} and R^{EE2} each independently represents an alkylene group having 2 to 10 carbon atoms. A^{EE1} and A^{EE2} each independently represent an alkyl group having 1 to 6 carbon atoms, an aryl group having 6 to 12 carbon atoms, or an aralkyl group having 7 to 18 carbon atoms. m represents an integer of 1 or more.

In the general formula (EE), the alkylene group represented by R^{EE1} is preferably an alkylene group having 3 to 10 carbon atoms, and more preferably an alkylene group having 3 to 6 carbon atoms. The alkylene group represented R^{EE1} may be linear, branched or cyclic, but is preferably linear.

When the alkylene group represented by R^{EE1} has 3 or more carbon atoms, a decrease in flowability of the resin composition is suppressed and thermal plasticity is easily developed. When the alkylene group represented by R^{EE1} has 10 or less carbon atoms, or the alkylene group represented by R^{EE1} is linear, the affinity with the cellulose acylate tends to be enhanced. Therefore, when the alkylene group represented by R^{EE1} is linear and has carbon atoms in the above range, the moldability of the resin composition is improved.

From the above viewpoints, the alkylene group represented by R^{EE1} is preferably an n-hexylene group (-(CH₂)₆-), in particular. That is, the polyether ester compound is preferably a compound in which an n-hexylene group (-(CH₂)₆-) is represented as R^{EE1}.

In the general formula (EE), the alkylene group represented by R^{EE2} is preferably an alkylene group having 3 to 10 carbon atoms, and more preferably an alkylene group having 3 to 6 carbon atoms. The alkylene group represented R^{EE2} may be linear, branched or cyclic, but is preferably linear.

When the alkylene group represented by R^{EE2} has 3 or more carbon atoms, a decrease in flowability of the resin composition is suppressed and thermal plasticity is easily developed. When the alkylene group represented by R^{EE2} has 10 or less carbon atoms, or the alkylene group represented by R^{EE2} is linear, the affinity with the cellulose acylate tends to be enhanced. Therefore, when the alkylene group represented by R^{EE2} is linear and has carbon atoms in the above range, the moldability of the resin composition is improved.

From the above viewpoints, the alkylene group represented by R^{EE2} is preferably an n-butylene group (-(CH₂)₄-), in particular. That is, the polyether ester compound is preferably a compound in which an n-butylene group (-(CH₂)₄-) is represented as R^{EE2}.

In the general formula (EE), the alkyl group represented by A^{EE1} and A^{EE2} is an alkyl group having 1 to 6 carbon atoms, and more preferably an alkyl group having 2 to 4 carbon atoms. The alkyl group represented by A^{EE1} and A^{EE2} may be linear, branched or cyclic, but is preferably branched.

The aryl group represented by A^{EE1} and A^{EE2} is an aryl group having 6 to 12 carbon atoms, and examples thereof include unsubstituted aryl groups such as a phenyl group and naphthyl group, and substituted phenyl groups such as a t-butylphenyl group and a hydroxyphenyl group.

The aralkyl group represented by A^{EE1} and A^{EE2} is a group represented by -R^{A}-Ph. R^{A} represents a linear or branched alkylene group having 1 to 6 carbon atoms (preferably 2 to 4 carbon atoms). Ph represents an unsubstituted phenyl group or a substituted phenyl group substituted with a linear or branched alkyl group having 1 to 6 carbon atoms (preferably 2 to 6 carbon atoms). Specific examples of the aralkyl group include unsubstituted aralkyl groups such as a benzyl group, a phenylmethyl group (phenethyl group), a phenylpropyl group, and a phenylbutyl group, or substituted aralkyl groups such as a methylbenzyl group, a dimethylbenzyl group and a methylphenethyl group.

It is preferable that at least one of A^{EE1} and A^{EE2} represents an aryl group or an aralkyl group. That is, the polyether ester compound is preferably a compound in which an aryl group (preferably a phenyl group) or an aralkyl group is represented as at least one of A^{EE1} and A^{EE2}, and more preferably a compound in which an aryl group (preferably a phenyl group) or an aralkyl group is represented as both A^{EE1} and A^{EE2}.

Next, the properties of the polyether ester compound are described.

The polyether ester compound preferably has a weight average molecular weight (Mw) of 450 to 650, and more preferably from 500 to 600.

When the weight average molecular weight (Mw) is 450 or more, bleeding (a precipitation phenomenon) becomes difficult. When the weight average molecular weight (Mw) is 650 or less, the affinity with the cellulose acylate tends to be enhanced. Therefore, when the weight average molecular weight (Mw) is within the above range, the moldability of the resin composition is improved.

The weight average molecular weight (Mw) of the polyether ester compound is a value measured by gel permeation chromatography (GPC). Specifically, the molecular weight measurement by GPC is performed with a chloroform solvent using column TSK gel GMHHR-M + TSK gel GMHHR-M (7.8 mm ID 30 cm) manufactured by Tosoh Corporation, and using HPLC 1100 manufactured by Tosoh Corporation as a measuring device. Then, the weight average molecular weight is calculated from this measurement result using a molecular weight calibration curve prepared from a monodisperse polystyrene standard sample.

The polyether ester compound preferably has a viscosity at 25 °C of 35 mPa·s to 50 mPa-s, and more preferably of 40 mPa-s to 45 mPa-s.

When the viscosity is 35 mPa·s or more, the dispersibility in the cellulose acylate is easily improved. When the viscosity is 50 mPa·s or less, the dispersion anisotropy of the polyether ester compound is difficult to occur. Therefore, when the viscosity is within the above range, the moldability of the resin composition is improved.

The viscosity is a value measured with an E-type viscometer.

The polyether ester compound preferably has a solubility parameter (SP value) of 9.5 to 9.9, and more preferably of 9.6 to 9.8.

When the solubility parameter (SP value) is 9.5 to 9.9, the dispersibility in the cellulose acylate is easily improved.

The solubility parameter (SP value) is a value calculated by the Fedor's method. Specifically, the solubility parameter (SP value) is calculated according to the description of, for example, Polym. Eng. Sci., Vol. 14, p. 147 (1974) by the following equation. Equation: SP value = √ (Ev/v) = √ (ΣΔei/ΣΔvi) (in the Equation, Ev: vaporization energy (cal/mol), v: molar volume (cm³/mol), Δei: evaporation energy of each atom or atomic group, and Δvi: molar volume of each atom or atomic group)

The solubility parameter (SP value) adopts (cal/cm³)^{1/2} as a unit, but the unit is omitted according to the practice and the notation is expressed in dimensionless.

Specific examples of the polyether ester compound are shown in the Table 2 below, but the present invention is not limited thereto.

**[Table 2]**

| | R⁷ | R⁸ | A¹ | A² | Mw | Viscosity (25°C) | APHA value | SP value |
|---|---|---|---|---|---|---|---|---|
| PEE1 | -(CH₂)₆- | -(CH₂)₄- | Phenyl group | Phenyl group | 550 | 43 | 120 | 9.7 |
| PEE2 | -(CH₂)₂- | -(CH₂)₄- | Phenyl group | Phenyl group | 570 | 44 | 115 | 9.4 |
| PEE3 | -(CH₂)₁₀- | -(CH₂)₄- | Phenyl group | Phenyl group | 520 | 48 | 110 | 10.0 |
| PEE4 | -(CH₂)₆- | -(CH₂)₂- | Phenyl group | Phenyl group | 550 | 43 | 115 | 9.3 |
| PEE5 | -(CH₂)₆- | -(CH₂)₁₀- | Phenyl group | Phenyl group | 540 | 45 | 115 | 10.1 |
| PEE6 | -(CH₂)₆- | -(CH₂)₄- | t-butyl group | t-butyl group | 520 | 44 | 130 | 9.7 |
| PEE7 | -(CH₂)₆- | -(CH₂)₄- | Phenyl group | Phenyl group | 460 | 45 | 125 | 9.7 |
| PEE8 | -(CH₂)₆- | -(CH₂)₄- | Phenyl group | Phenyl group | 630 | 40 | 120 | 9.7 |
| PEE9 | -(CH₂)₆- | -(CH₂)₄- | Phenyl group | Phenyl group | 420 | 43 | 135 | 9.7 |
| PEE10 | -(CH₂)₆- | -(CH₂)₄- | Phenyl group | Phenyl group | 670 | 48 | 105 | 9.7 |
| PEE11 | -(CH₂)₆- | -(CH₂)₄- | Phenyl group | Phenyl group | 550 | 35 | 130 | 9.7 |
| PEE12 | -(CH₂)₆- | -(CH₂)₄- | Phenyl group | Phenyl group | 550 | 49 | 125 | 9.7 |
| PEE13 | -(CH₂)₆- | -(CH₂)₄- | Phenyl group | Phenyl group | 550 | 32 | 120 | 9.7 |
| PEE14 | -(CH₂)₆- | -(CH₂)₄- | Phenyl group | Phenyl group | 550 | 53 | 105 | 9.7 |
| PEE15 | -(CH₂)₆- | -(CH₂)₄- | Phenyl group | Phenyl group | 550 | 43 | 135 | 9.7 |
| PEE16 | -(CH₂)₆- | -(CH₂)₄- | Phenyl group | Phenyl group | 550 | 43 | 105 | 9.7 |
| PEE17 | -(CH₂)₆- | -(CH₂)₄- | Phenyl group | Phenyl group | 550 | 43 | 150 | 9.7 |
| PEE18 | -(CH₂)₆- | -(CH₂)₄- | Phenyl group | Phenyl group | 550 | 43 | 95 | 9.7 |

The content of the plasticizer in the resin composition according to the present embodiment is preferably 15 mass% or less, more preferably 10 mass% or less, and still more preferably 5 mass% or less, based on the total mass of the resin composition. When the ratio of the plasticizer is within the above range, the elasticity modulus is increased and the heat resistance is also improved. In addition, the bleeding of the plasticizer is also suppressed.

### <Other Components>

Examples of other components include a flame retardant, a compatibilizer, an antioxidant, a releasing agent, a light fastness agent, a weathering agent, a colorant, a pigment, a modifier, a drip inhibitor, an antistatic agent, a hydrolysis inhibitor, a filler, a reinforcing agent (glass fibers, carbon fibers, talc, clay, mica, glass flakes, milled glass, glass beads, crystalline silica, alumina, silicon nitride, aluminum nitride, boron nitride, etc.), or the like. The content of these components is preferably 0 mass% to 5 mass% based on the entire resin composition, respectively. Here, "0 mass%" means not containing other components.

### (Other Resins)

The resin composition according to the present embodiment may contain other resins than the cellulose acylate and the copolymer. However, the other resins are preferably 5 mass% or less, more preferably 1 mass% or more, and particularly preferably 0 mass%, based on the total mass of the resin composition.

Examples of the other resins include conventionally known thermoplastic resins, and specific examples thereof include: a polycarbonate resin; a polypropylene resin; a polyester resin; a polyolefin resin; a polyester carbonate resin; a polyphenylene ether resin; a polyphenylene sulfide resin; a polysulfone resin; a polyether sulfone resin; a polyarylene resin; a polyether imide resin; a polyacetal resin; a polyvinyl acetal resin; a polyketone resin; a polyether ketone resin; a polyether ether ketone resin; a polyaryl ketone resin; a polyether nitrile resin; a liquid crystal resin; a polybenzimidazole resin; a polyparabanic acid resin; a vinyl polymer or copolymer resin obtained by polymerization or copolymerization of one or more vinyl monomers selected from the group consisting of an aromatic alkenyl compound, a methacrylic acid ester, an acrylic ester, and a vinyl cyanide compound; a diene-aromatic alkenyl compound copolymer resin; a vinyl cyanide-diene-aromatic alkenyl compound copolymer resin; an aromatic alkenyl compound-diene-vinyl cyanide-N-phenylmaleimide copolymer resin; a vinyl cyanide-(ethylene-diene-propylene (EPDM))-aromatic alkenyl compound copolymer resin; a vinyl chloride resin; a chlorinated vinyl chloride resin; or the like. The above resins may be used alone, or may be used in combination of two or more thereof.

### [Method for Producing Resin Composition]

The method for producing the resin composition of the present embodiment includes a step of preparing a resin composition containing the cellulose acylate and the copolymer.

The resin composition according to the present embodiment is produced, for example, by melt-kneading a mixture containing at least cellulose acylate and, if necessary, a plasticizer, other components, and the like. Besides, the resin composition according to the present embodiment can also be produced, for example, by dissolving the above components in a solvent.

Examples of methods for melt-kneading includes known means, and specific examples thereof include a twin-screw extruder, a Henschel mixer, a Banbury mixer, a single screw extruder, a multi-screw extruder, a co-kneader or the like.

The temperature during kneading may be determined according to the melting temperature of the cellulose acylate to be used, and is preferably, for example, 140°C to 240°C, and more preferably 160°C to 210°C from the viewpoint of thermal decomposition and fluidity.

### [First Resin Molded Article and Production Method therefor]

A first resin molded article according to the present embodiment contains a resin obtained by reacting cellulose acylate having a weight average molecular weight of 30,000 to 90,000 and an olefin-(meth)acrylate-glycidyl methacrylate copolymer in which the mass ratio Ma/Mb of the content Ma of the structural unit represented by the following formula (a) to the content Mb of the structural unit represented by the following formula (b) contained in the first copolymer is 5 to 10.

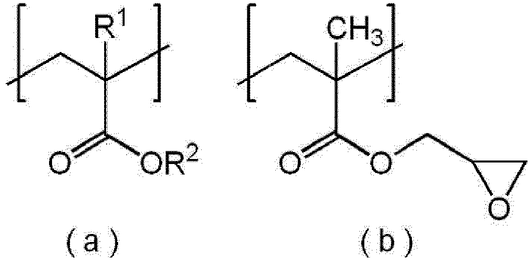

In the formula (a), R¹ represents a hydrogen atom or a methyl group, and R² represents an alkyl group having 1 to 10 carbon atoms.

### [Second Resin Molded Article and Production Method therefor]

A second resin molded article according to the present embodiment contains a resin obtained by reacting cellulose acylate having a weight average molecular weight of 30,000 to 90,000 and an olefin-(meth)acrylate-(unsaturated-1,2-dicarboxylic anhydride) copolymer in which the mass ratio Ma/Mc of the content Ma of the structural unit represented by the following formula (a) to the content Mb of the structural unit represented by the following formula (c) contained in the second copolymer is 1 to 100.

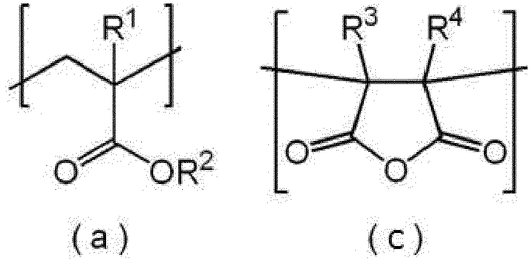

In the formula (a), R¹ represents a hydrogen atom or a methyl group, and R² represents an alkyl group having 1 to 10 carbon atoms. In the formula (c), R³ and R⁴ each independently represent a hydrogen atom or an alkyl group having 1 to 10 carbon atoms.

### [Third Resin Molded Article and Production Method therefor]

A third resin molded article according to the present embodiment contains a resin obtained by reacting cellulose acylate having a weight average molecular weight of 30,000 to 90,000 and an olefin-glycidyl methacrylate copolymer in which the content Mb of the structural unit represented by the following formula (b) is 5 mass% to 20 mass% based on the total mass of the third copolymer.

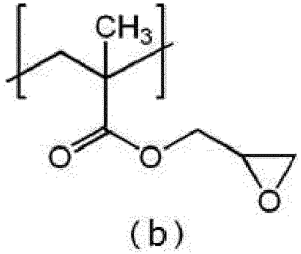

### [Fourth Resin Molded Article and Production Method therefor]

A fourth resin molded article according to the present embodiment contains a resin obtained by reacting cellulose acylate having a weight average molecular weight of 30,000 to 90,000 and an olefin-alkyl(meth)acrylate copolymer in which the content Ma of the structural unit represented by the following formula (a) is 15 mass% to 35 mass% based on the total mass of the third copolymer.

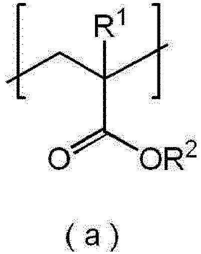

In the formula, R¹ represents a hydrogen atom or a methyl group, and R² represents an alkyl group having 1 to 10 carbon atoms.

The preferred embodiments of the cellulose acylate and the copolymer in the resin molded article according to the present embodiment are the same as the preferred embodiments of the cellulose acylate and the copolymer in the resin composition according to the present embodiment as described above.

The resin molded article according to the present embodiment is formed by molding the resin composition according to the present embodiment. At least a part of the cellulose acylate and the copolymer contained in the resin composition according to the present embodiment react with each during molding to form a resin obtained by reacting the cellulose acylate and the copolymer

In addition, the method for producing a resin molded article according to the present embodiment preferably includes a step of molding the resin composition according to the present embodiment.

As for the molding method, for example, injection molding, extrusion molding, blow molding, hot press molding, calender molding, coating molding, cast molding, dipping molding, vacuum molding, transfer molding and the like may be applied.

The method for producing a resin molded article according to the present embodiment is preferably injection molding from the viewpoint of a high degree of freedom of shape. With respect to injection molding, a molded article is obtained by heating and melting the resin composition, pouring the molten resin composition into a mold, and solidifying the same. The resin composition may be molded by injection compression molding.

The cylinder temperature of injection molding is preferably 140°C to 240°C, more preferably 150°C to 220°C, and still more preferably 160°C to 220°C. The mold temperature of the injection molding is preferably 30°C to 120°C, and more preferably 40°C to 80°C. Injection molding may be performed by using commercially available devices such as NEX 500 manufactured by NISSEI PLASTIC INDUSTRIAL CO., LTD., NEX 150 manufactured by NISSEI PLASTIC INDUSTRIAL CO., LTD., NEX 70000 manufactured by NISSEI PLASTIC INDUSTRIAL CO., LTD., and SE 50D manufactured by TOSHIBA MACHINE CO., LTD.

The resin molded article according to the present embodiment is suitably used for applications such as electronic and electrical equipment, office equipment, household electric appliances, automotive interior materials, engine covers, car bodies, containers, and the like. More specifically, casings of electronic and electric equipment and household electric appliances; various parts of electronic and electric equipment and household electrical appliances; interior parts of automobiles; storage cases of CD-ROM and DVD; dishes; beverage bottles; food trays; wrapping materials; films; sheets; or the like.

Hereinafter, the present invention is described in more detail with reference to examples, but the present invention is not limited to these examples. Unless otherwise specified, "part" indicates "part by mass".

### Experimental Example 1

### <Synthesis of Cellulose Acylate> (Synthesis of Cellulose Acetate CA1)

Acetylation: 3 parts of cellulose powders (KC Flock W50 manufactured by NIPPON PAPER Chemicals CO., LTD.), 0.15 part of sulfuric acid, 30 parts of acetic acid and 6 parts of acetic anhydride were charged into a reaction vessel, and the mixture stirred at 20°C for 4 hours, so as to acetylate the cellulose.

Deacetylation and molecular weight lowering: immediately after completion of stirring, 3 parts of acetic acid and 1.2 parts of pure water were added to the acetylated solution, the mixture was stirred at 20°C for 30 minutes, thereafter 4.5 parts of 0.2 M hydrochloric acid aqueous solution was added thereto, and the solution was heated to 75°C and stirred for 5 hours. The solution was added dropwise to 200 parts of pure water over 2 hours, was allowed to stand for 20 hours and then filtered through a filter having a pore size of 6 µm to obtain 4 parts of white powders.

Washing: the obtained white powders were washed with pure water to a conductivity of 50 µS or less using a filter press (SF (PP) manufactured by KURITA MACHINERY MFG. Co. Ltd.,), and then dried.

Post-treatment: 0.2 part of calcium acetate and 30 parts of pure water were added to 3 parts of the dried white powders, the mixture was stirred at 25°C for 2 hours and then filtered, and the obtained powder was dried at 60°C for 72 hours to obtain about 2.5 parts of cellulose acetate CA1.

### (Synthesis of Cellulose Acetate CA2)

Cellulose acetate CA2 was obtained in the same manner as CA1, except that the amount of sulfuric acid used for acetylation was changed from 0.15 part to 0.30 part.

### (Synthesis of Cellulose Acetate CA3)

Cellulose acetate CA3 was obtained in the same manner as CA1, except that the amount of sulfuric acid used for acetylation was changed from 0.15 part to 0.03 part.

### (Synthesis of Cellulose Acetate CA4)

Cellulose acetate CA4 was obtained in the same manner as CA1, except that the stirring for 5 hours was changed to 7 hours in the deacetylation and molecular weight lowering.

### (Synthesis of Cellulose Acetate CA5)

Cellulose acetate CA5 was obtained in the same manner as CA1, except that the stirring was performed at 65°C for 7 hours rather than at 75°C for 5 hours in the deacetylation and molecular weight lowering.

### (Synthesis of Cellulose Acetate CA6)

Cellulose acetate CA6 was obtained in the same manner as CA1, except that the stirring was performed at 80°C for 4 hours rather than at 75°C for 5 hours in the deacetylation and molecular weight lowering.

### (Synthesis of Cellulose Propionate CP1)

Cellulose propionate CP1 was obtained in the same manner as CA1, except that 2 parts of acetic anhydride was used and then 2.5 parts of propionic anhydride was used in the acetylation, and the reaction time in the deacetylation and molecular weight lowering was changed from 7 hours to 5 hours.

### (Preparation of Cellulose Acetates CA7-1 to CA7-3)

Commercially available cellulose acetate (L50, manufactured by Daicel Corporation) was prepared as cellulose acetate CA7-1, commercially available cellulose acetate (L20, manufactured by Daicel Corporation) was prepared as cellulose acetate CA7-2, and commercially available cellulose acetate (CA 398-3, manufactured by Eastman Chemical Company) was prepared as cellulose acetate CA7-3.

### (Synthesis of Cellulose Acetate CA8)

Cellulose acetate CA8 was obtained in the same manner as CA1, except that the stirring for 5 hours was changed to 4 hours 30 minutes in the deacetylation and molecular weight lowering.

### (Synthesis of Cellulose Acetate CA9)

Cellulose acetate CA9 was obtained in the same manner as CA1, except that the solution obtained by acetylation was allowed to stand for 10 hours at room temperature (20°C, and the same hereinafter), and thereafter the deacetylation and molecular weight lowering were performed.

### <Measurement of Weight Average Molecular Weight, Degree of Polymerization, and Degree of Substitution>

The degree of polymerization of the cellulose acylate can be determined from the weight average molecular weight by the following procedures.

First, the weight average molecular weight of the cellulose acylate is measured in terms of polystyrene with a GPC apparatus (HLC-8320 GPC, column: TSK gel α-M, manufactured by Tosoh Corporation) using a solution of dimethylacetamide / lithium chloride = 90/10.

Subsequently, the degree of polymerization of the cellulose acylate can be determined by dividing by the structural unit molecular weight of the cellulose acylate. The structural unit molecular weight is, for example, 263 when the degree of substitution with the acetyl group is 2.4, and is 287 when the degree of substitution is 2.9. The evaluation results of the degree of polymerization and degree of substitution of the cellulose acylate synthesized by this method are summarized in Table 3.

**[Table 3]**

| | Substituent | Mw | Degree of polymerization | Degree of substitution |
|---|---|---|---|---|
| CA1 | Acetyl group | 76,700 | 300 | 2.25 |
| CA2 | Acetyl group | 40,500 | 160 | 2.20 |
| CA3 | Acetyl group | 86,300 | 325 | 2.45 |
| CA4 | Acetyl group | 32,600 | 130 | 2.15 |
| CA5 | Acetyl group | 88,000 | 320 | 2.65 |
| CA6 | Acetyl group | 61,500 | 250 | 2.05 |
| CP1 | Propionyl group | 61,000 | 200 | 2.55 |
| CA7-1 | Acetyl group | 160,000 | 607 | 2.45 |
| CA7-2 | Acetyl group | 117,800 | 447 | 2.45 |
| CA7-3 | Acetyl group | 79,000 | 300 | 2.40 |
| CA8 | Acetyl group | 94,570 | 350 | 2.55 |
| CA9 | Acetyl group | 29,100 | 115 | 2.20 |

### <Synthesis of Ethylene-(meth)acrylate-glycidyl Methacrylate Copolymer> (Preparation of EAG1 to EAG3)

Commercially available ethylene-(meth)acrylate-glycidyl methacrylate copolymers, LOTADER AX 8930 manufactured by Arkema S.A. was prepared as (EAG1), Bondfast BF-7M manufactured by Sumitomo Chemical Co., Ltd. was prepared as (EGA2), and LOTDER AX 8900 manufactured by Arkema S.A. was prepared as (EGA3).

### (Synthesis of EAG4)

72 parts by mass of an ethylene monomer, 20 parts by mass of methyl acrylate and 8 parts by mass of a glycidyl methacrylate monomer were dissolved in tetrahydrofuran, 0.05 parts by mass of azobisisobutyronitrile was added thereto, and the mixture was stirred at 40°C for 24 hours and was added dropwise to pure water. The resultant precipitate was filtered and dried to obtain an ethylene-methyl methacrylate-glycidyl methacrylate copolymer (EAG4).

### (Synthesis of EAG5 to EAG9)

(EAG5) to (EAG8) were respectively obtained in the same manner as in the synthesis of (EAG4), except that an ethylene monomer, a propylene (1-methylethylene) monomer, a (meth)acrylate monomer, or a glycidyl methacrylate monomer were used in the composition ratio shown in Table 4.

**[Table 4]**

| | Mass ratio (mass%) | | | | Ma/Mb |
|---|---|---|---|---|---|
| | Ethylene | Propylene (1-methylethylene) | (Meth)acrylate | Glycidyl methacrylate | |
| EAG1 | 73 | - | MA=24 | 3 | 8 |
| EAG2 | 67 | - | MA=27 | 6 | 4.5 |
| EAG3 | 68 | - | MA=24 | 8 | 3 |
| EAG4 | 72 | - | MA=20 | 8 | 4 |
| EAG5 | 73 | - | EA=24 | 3 | 8 |
| EAG6 | 73 | - | BA=24 | 3 | 8 |
| EAG7 | 78 | - | MA=20 | 2 | 10 |
| EAG8 | 76 | - | MA=22 | 2 | 11 |
| EAG-9 | 72 | - | MA=24 | 4 | 6 |
| EAG-10 | - | 73 | MA=24 | 3 | 8 |

In Table 4, MA represents methyl acrylate, EA represents ethyl acrylate, and BA represents n-butyl acrylate.

### <Preparation of Adipate Ester-containing Compound>

A commercially available adipate ester-containing compound (Daifatty 101 manufactured by DAIHACHI CHEMICAL INDUSTRY CO., LTD) was prepared as Compound AE1.

### <Evaluation on Impact Resistance Strength and Flexural Modulus>

With the charged composition ratio shown in Table 5, kneading was performed with a twin-screw kneader (TEX 41SS, manufactured by TOSHIBA MACHINE CO., LTD.) at a cylinder temperature A, so as to obtain a resin composition (pellets).

With respect to Comparative Examples 7 and 8, kneading was performed with the composition of Example 1 or 3 described in JP-A-2014-084343, so as to obtain pellets.

Specifically, in Comparative Example 7, 25 parts by mass of an adipate ester-containing compound (Daifatty 101 manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

In Comparative Example 8, 25 parts by mass of triphenyl phosphate (manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

With respect to the obtained pellets, an ISO multipurpose dumbbell (dimensions of the measuring part: width 100 mm × thickness 40 mm) was molded using an injection molding machine (NEX 140III manufactured by NISSEI PLASTIC INDUSTRIAL CO., LTD.) at a cylinder temperature B at which the injection peak pressure does not exceed 180 MPa.

The cylinder temperatures A and B are shown in Table 3.

The obtained ISO multipurpose dumbbell test piece was processed into a notched impact test piece in accordance with the method in ISO 179-1, and the notched impact strength at 23°C was measured with an impact strength measuring device (Charpy Auto Impact Tester CHN3 type manufactured by Toyo Seiki Seisaku-sho, Ltd.). The results are shown in Table 5.

In addition, the flexural modulus was measured using a universal testing apparatus (Autograph AG-X plus, manufactured by Shimadzu Corporation) in accordance with the method in ISO-178. The results are shown in Table 5.

**[Table 5]**

| | Mass ratio (mass%) | | | Cylinde r tempera ture A (°C) | Cylinde r tempera ture B (°C) | Charp y impact resista nce strengt h (kJ/m² ) | Flexur at modul us (MPa) |
|---|---|---|---|---|---|---|---|
| | Cellulose acylate | Olefin-(meth)acry late-glycidyl methacryla te copolymer | Adipate ester-containing compound | | | | |
| Example 1 | CA1=100 | EAG1=2 | AE1=15 | 190 | 200 | 12.5 | 3,200 |
| Ref. Example 2 | CA1=100 | EAG2=2 | AE1=15 | 190 | 200 | 6.8 | 3,250 |
| Ref. Example 3 | CA1=100 | EAG4=2 | AE1=15 | 190 | 200 | 6.3 | 3,150 |
| Example 4 | CA1=100 | EAG5=2 | AE1=15 | 190 | 200 | 10.5 | 3,000 |
| Example 5 | CA1=100 | EAG6=2 | AE1=15 | 190 | 200 | 11.9 | 3,050 |
| Example 6 | CA1=100 | EAG7=2 | AE1=15 | 190 | 200 | 10.3 | 3,025 |
| Example 7 | CA2=100 | EAG1=2 | AE1=15 | 190 | 200 | 11.5 | 3,000 |
| Example 8 | CA3=100 | EAG1=2 | AE1=15 | 190 | 200 | 12.6 | 3,000 |
| Example 9 | CA4=100 | EAG1=2 | AE1=15 | 190 | 200 | 11.3 | 3,150 |
| Example 10 | CA5=100 | EAG1=2 | AE1=15 | 210 | 220 | 7.6 | 3,000 |
| Example 11 | CA6=100 | EAG1=2 | AE1=15 | 210 | 220 | 7.9 | 2,950 |
| Example 12 | CP1=100 | EAG1=2 | AE1=15 | 180 | 200 | 8.2 | 3,000 |
| Example 13 | CP1=100 | EAG1=0.5 | AE1=15 | 200 | 210 | 10.3 | 3,150 |
| Example 14 | CA1=100 | EAG1=10 | AE1=15 | 200 | 210 | 12.8 | 3,050 |
| Example 15 | CA1=100 | EAG1=0.3 | AE1=15 | 210 | 220 | 7.9 | 3,350 |
| Example 16 | CA1=100 | EAG 1-11 | AE1=15 | 210 | 220 | 8.9 | 2,950 |
| Example 17 | CA1=100 | EAG1=5 | None | 230 | 240 | 8.3 | 4,500 |
| Example 18 | CA2=100 | EAG1=5 | None | 230 | 240 | 6.5 | 4,450 |
| Example 19 | CA3=100 | EAG1=5 | None | 230 | 240 | 6.3 | 4,250 |
| Example 20 | CA4=100 | EAG1=5 | None | 230 | 240 | 6.5 | 4,300 |
| Example 21 | CA5=100 | EAG1=2 | None | 240 | 250 | 5.8 | 4,000 |
| Example 22 | CA6=100 | EAG1=2 | None | 240 | 250 | 5.6 | 4,100 |
| Example 23 | CP1=100 | EAG1=2 | None | 240 | 250 | 4.7 | 2,800 |
| Example 24 | CA7-3=100 | EAG1=2 | AE1=15 | 190 | 200 | 11.8 | 3,000 |
| Example 25 | CA1=100 | EAG9=2 | AE1=15 | 190 | 220 | 10.8 | 3,050 |
| Example 26 | CA1=100 | EAG10=2 | AE1=15 | 180 | 190 | 15.4 | 2,950 |
| Comparativ e Example 1 | CA1=100 | None | AE1=15 | 220 | 230 | 3.5 | 2,850 |
| Comparativ e Example 2 | CA7-2=100 | EAG1=2 | AE1=15 | 220 | 230 | 6.8 | 2,200 |
| Comparativ e Example 3 | CA8=100 | EAG1=2 | AE1=15 | 220 | 230 | 7.2 | 2,250 |
| Comparativ e Example 4 | CA9=100 | EAG1=2 | AE1=15 | 190 | 200 | 3.5 | 2,350 |
| Comparativ e Example 5 | CA1=100 | EAG3=2 | AE1=15 | 210 | 220 | 4.5 | 2,150 |
| Comparativ e Example 6 | CA1=100 | EAG8=2 | AE1=15 | 210 | 220 | 3.2 | 2,550 |
| Comparativ e Example 7 | Example 1 of JP-A-2014-084343 | | | 220 | 230 | 10.5 | 2,000 |
| Comparativ e Example 8 | Example 3 of JP-A-2014-084343 | | | 220 | 230 | 6.5 | 2,450 |
| Comparativ e Example 9 | CA7-1=100 | EAG1=2 | AE1=15 | 240 | 250 | 5.9 | 2,850 |

From the above results, it is understood that the resin composition of this example can obtain a resin molded article excellent in impact resistance and having a high flexural modulus as compared with the resin composition of the Comparative Example.

### Experimental Example 2

### <Synthesis of Ethylene-(meth)acrylate-maleic Anhydride Copolymer> (Preparation of EAM1 to EAM5)

Commercially available ethylene-(meth)acrylate-maleic anhydride copolymers, LOTADER 8200 (manufactured by Arkema S.A.) was prepared as EAM1, LOTADER 4210 (manufactured by Arkema S.A.) was prepared as EAM2, LOTDER 4603 (manufactured by Arkema S.A.) was prepared as EAM3, LOTADER 4700 (manufactured by Arkema S.A.) was prepared as EAM4 and LOTADER 3430 (manufactured by Arkema S.A.) was prepared as EAM5.

### (Synthesis of EAM6)

89 parts by mass of an ethylene monomer, 6.5 parts by mass of an ethyl acrylate monomer and 7 parts by mass of a maleic anhydride monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-ethyl acrylate-maleic anhydride copolymer (EAG6).

### (Synthesis of EAM7)

73.8 parts by mass of an ethylene monomer, 26 parts by mass of a methyl acrylate monomer and 0.2 part by mass of a maleic anhydride monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-methyl acrylate-maleic anhydride copolymer (EAG7).

### (Synthesis of EAM8)

An ethylene-methyl acrylate-maleic anhydride copolymer (EAM8) was obtained in the same manner as EAM6, except that 90.7 parts of a propylene monomer, 6.5 parts of a methyl acrylate monomer and 2.8 parts of a maleic anhydride monomer were used.

**[Table 6]**

| | Mass ratio (mass%) | | | | Ma/Mc |
|---|---|---|---|---|---|
| | Ethylene | Propylene | (Meth)acrylate | Maleic anhydride | |
| EAM1 | 90.7 | - | EA=6.5 | 2.8 | 2.3 |
| EAM2 | 89.9 | - | BA=6.5 | 3.6 | 1.8 |
| EAM3 | 73.7 | - | MA=26 | 0.3 | 86.6 |
| EAM4 | 69.7 | - | EA=29 | 1.3 | 22.3 |
| EAM5 | 81.9 | - | MA=15 | 3.1 | 4.8 |
| EAM6 | 86.5 | - | EA=6.5 | 7.0 | 0.9 |
| EAM7 | 73.8 | - | MA=26 | 0.2 | 130 |
| EAM8 | - | 90.7 | EA=6.5 | 2.8 | 2.3 |

In Table 6, MA represents methyl acrylate, EA represents ethyl acrylate, and BA represents n-butyl acrylate.

### <Preparation of Adipate Ester-containing Compound>

A commercially available adipate ester-containing compound (Daifatty 101 manufactured by DAIHACHI CHEMICAL INDUSTRY CO., LTD) was prepared as Compound AE1.

### <Preparation of Plasticizer other than Adipate Ester (Other Plasticizer)>

A commercially available polyether ester (Adekasizer RS-1000, manufactured by ADEKA Corporation) was prepared as Compound EE1.

### <Evaluation on Impact Resistance Strength and Flexural Modulus>

With the charged composition ratio shown in Table 7, kneading was performed with a twin-screw kneader (TEX 41SS, manufactured by TOSHIBA MACHINE CO., LTD.) at a cylinder temperature A, so as to obtain a resin composition (pellets).

With respect to Comparative Examples 7 and 8, kneading was performed with the composition of Example 1 or 3 described in JP-A-2014-084343, so as to obtain pellets.

Specifically, in Comparative Example 7, 25 parts by mass of an adipate ester-containing compound (Daifatty 101 manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

In Comparative Example 8, 25 parts by mass of triphenyl phosphate (manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

With respect to the obtained pellets, an ISO multipurpose dumbbell (dimensions of the measuring part: width 100 mm × thickness 40 mm) was molded using an injection molding machine (NEX 140III manufactured by NISSEI PLASTIC INDUSTRIAL CO., LTD.) at a cylinder temperature B at which the injection peak pressure does not exceed 180 MPa.

The cylinder temperatures A and B are shown in Table 3.

The obtained ISO multipurpose dumbbell test piece was processed into a notched impact test piece in accordance with the method in ISO 179-1, and the notched impact strength at 23°C was measured with an impact strength measuring device (Charpy Auto Impact Tester CHN3 type manufactured by Toyo Seiki Seisaku-sho, Ltd.). The results are shown in Table 7.

In addition, the flexural modulus was measured using a universal testing apparatus (Autograph AG-X plus, manufactured by Shimadzu Corporation) in accordance with the method in ISO-178. The results are shown in Table 7.

### <Evaluation on Viscosity>

The obtained pellets were measured for melt viscosity at 220°C and a shear rate of 1,216 (/sec) using a capillary rheometer (Capirograph 1D, manufactured by Toyo Seiki Seisaku-sho, Ltd.). The smaller the value of the melt viscosity is, the better the moldability is.

**[Table 7]**

| | Mass ratio (mass%) | | | Cylinder temperature A (°C) | Cylinder temperature B (°C) | Charpy impact resistance strength (kJ/m²) | Flexural modulus (MPa) | Melt viscosity at 220°C and a shear rate of 1,216 (/sec) |
|---|---|---|---|---|---|---|---|---|
| | Cellulose acylate | Olefin-(meth)acrylate-(unsaturated-1,2-dicarboxylic anhydride) copolymer | Adipate ester-containing compound or other plasticizer | | | | | |
| Example 27 | CA1=100 | EAM1=2 | AE1=15 | 190 | 200 | 10.5 | 3,200 | 350 |
| Example 28 | CA1=100 | EAM2=2 | AE1=15 | 190 | 200 | 12.9 | 3,150 | 355 |
| Example 29 | CA1=100 | EAM3=2 | AE1=15 | 190 | 200 | 13.1 | 2,900 | 328 |
| Example 30 | CA1=100 | EAM4=2 | AE1=15 | 190 | 200 | 12.8 | 2,950 | 318 |
| Example 31 | CA1=100 | EAM5=2 | AE1=15 | 190 | 200 | 13.5 | 3,000 | 295 |
| Example 32 | CA2=100 | EAM1=2 | AE1=15 | 190 | 200 | 11.8 | 3,100 | 325 |
| Example 33 | CA3=101 | EAM1=2 | AE1=15 | 190 | 200 | 12.0 | 3,050 | 315 |
| Example 34 | CA4=101 | EAM1=2 | AE1=15 | 190 | 200 | 10.9 | 3,100 | 358 |
| Example 35 | CA5=102 | EAM1=2 | AE1=15 | 210 | 220 | 6.5 | 2,600 | 312 |
| Example 36 | CA6=102 | EAM1=2 | AE1=15 | 210 | 220 | 5.8 | 2,650 | 308 |
| Example 37 | CP1=100 | EAM1=2 | AE1=15 | 180 | 200 | 8.5 | 1,950 | 315 |
| Example 38 | CA1=100 | EAM1=0.5 | AE1=15 | 200 | 210 | 10.5 | 3,100 | 299 |
| Example 39 | CA1=100 | EAM1=10 | AE1=15 | 200 | 210 | 10.8 | 3,150 | 285 |
| Example 40 | CA1=100 | EAM1=0.3 | AE1=15 | 210 | 220 | 8.2 | 2,650 | 245 |
| Example 41 | CA1=100 | EAM1=11 | AE1=15 | 210 | 220 | 6.9 | 2,600 | 358 |
| Example 42 | CA1=100 | EAM1=5 | None | 230 | 240 | 10.1 | 5,200 | 299 |
| Example 43 | CA1=100 | EAM2=5 | None | 230 | 240 | 10.2 | 4,850 | 285 |
| Example 44 | CA1=100 | EAM3=5 | None | 230 | 240 | 10.1 | 5,180 | 282 |
| Example 45 | CA1=100 | EAM4=5 | None | 230 | 240 | 10.1 | 5,230 | 295 |
| Example 46 | CA1=100 | EAM5=5 | None | 240 | 250 | 10.2 | 5,140 | 285 |
| Example 47 | CA1=100 | EAM1=2 | EE1=15 | 190 | 200 | 8.5 | 2,950 | 555 |
| Example 48 | CA1=100 | EAM8=2 | AE1=15 | 190 | 200 | 11.5 | 2,950 | 415 |
| Example 49 | CA7-3=100 | EAM1=2 | AE1=15 | 190 | 200 | 10.8 | 3,150 | 355 |
| Comparative Example 10 | CA1=100 | None | AE1=15 | 220 | 230 | 3.5 | 2,850 | 785 |
| Comparative Example 11 | CA7-1=100 | EAM1=2 | AE1=15 | 230 | 240 | 6.8 | 2,200 | OL |
| Comparative Example 12 | CA8=100 | EAM1=2 | AE1=15 | 220 | 230 | 7.3 | 2,450 | 1,450 |
| Comparative Example 13 | CA9=100 | EAM1=2 | AE1=15 | 190 | 200 | 3.9 | 2,350 | 1,620 |
| Comparative Example 14 | CA1=100 | EAM6=2 | AE1=15 | 210 | 220 | 7.9 | 2,100 | 1,450 |
| Comparative Example 15 | CA1=100 | EAM7=2 | AE1=15 | 210 | 220 | 42 | 2,350 | 1,950 |
| Comparative Example 7 | Example 1 of JP-A-2014-084343A | | | 220 | 230 | 10.5 | 2,200 | 1,250 |
| Comparative Example 8 | Example 3 of JP-A-2014-084343A | | | 220 | 230 | 6.5 | 2,450 | 11,840 |
| Comparative Example 16 | CA7-2=100 | EAM1=2 | AE1=15 | 220 | 230 | 5.3 | 2,250 | 2,850 |

The OL in Table 7 means that it is impossible to measure with load cell measurable range overload.

From the above results, it is understood that the resin composition of this example can obtain a resin molded article excellent in impact resistance and having a high flexural modulus as compared with the resin composition of the Comparative Example.

### Experimental Example 3

### <Synthesis of Ethylene-glycidyl Methacrylate Copolymer> (Preparation of EG1 to EG4)

Commercially available ethylene-glycidyl methacrylate copolymers, LOTADER 8820 (manufactured by Arkema S.A.) was prepared as EG1, LOTADER 8840 (manufactured by Arkema S.A.) was prepared as EG2, Bondfast CG 5001 (manufactured by Sumitomo Chemical Co., Ltd.) was prepared as EG3, and Bondfast BF-E (manufactured by Sumitomo Chemical Co., Ltd.) was prepared as EG4.

### (Synthesis of EG5)

97 parts by mass of an ethylene monomer and 3 parts by mass of a glycidyl methacrylate monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-glycidyl methacrylate copolymer (EG5).

### (Synthesis of EG6)

78 parts by mass of an ethylene monomer and 22 parts by mass of a glycidyl methacrylate monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-glycidyl methacrylate copolymer (EG6).

(Synthesis of EG7) 86 parts by mass of an ethylene monomer and 14 parts by mass of a glycidyl methacrylate monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-glycidyl methacrylate copolymer (EG7).

### (Synthesis of EG8)

A propylene-glycidyl methacrylate copolymer (EG8) was obtained in the same manner as EG-7 except that the ethylene monomer was changed to a propylene monomer.

The mass ratios of the ethylene monomer or propylene monomer and the glycidyl methacrylate monomer in EG1 to EG8 are summarized in Table 8.

**[Table 8]**

| | Mass ratio (mass%) | | |
|---|---|---|---|
| | Ethylene | Propylene | Glycidyl methacrylate |
| EG1 | 95 | - | 5 |
| EG2 | 92 | - | 8 |
| EG3 | 81 | - | 19 |
| EG4 | 88 | - | 12 |
| EG5 | 97 | - | 3 |
| EG6 | 78 | - | 22 |
| EG7 | 86 | - | 14 |
| EG8 | - | 86 | 14 |

### <Preparation of Adipate Ester-containing Compound or Other Plasticizer>

A commercially available adipate ester-containing compound (Daifatty 101 manufactured by DAIHACHI CHEMICAL INDUSTRY CO., LTD) was prepared as Compound AE1, and a commercially available adipate ester-containing compound (Adekasizer RS-170, manufactured by ADEKA Corporation) was prepared as Compound AE2. In addition, as a plasticizer (another plasticizer) other than the adipate ester-containing compound, a polyether ester (Adekasizer RS-1000, manufactured by ADEKA Corporation) was prepared as EE-1.

### <Evaluation on Impact Resistance Strength and Flexural Modulus>

With the charged composition ratio shown in Table 9, kneading was performed with a twin-screw kneader (TEX 41SS, manufactured by TOSHIBA MACHINE CO., LTD.) at a cylinder temperature A, so as to obtain a resin composition (pellets).

With respect to Comparative Examples 7 and 8, kneading was performed with the composition of Example 1 or 3 described in JP-A-2014-084343, so as to obtain pellets.

Specifically, in Comparative Example 7, 25 parts by mass of an adipate ester-containing compound (Daifatty 101 manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

In Comparative Example 8, 25 parts by mass of triphenyl phosphate (manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

With respect to the obtained pellets, an ISO multipurpose dumbbell (dimensions of the measuring part: width 100 mm × thickness 40 mm) was molded using an injection molding machine (NEX 140III manufactured by NISSEI PLASTIC INDUSTRIAL CO., LTD.) at a cylinder temperature B at which the injection peak pressure does not exceed 180 MPa.

The cylinder temperatures A and B are shown in Table 3.

The obtained ISO multipurpose dumbbell test piece was processed into a notched impact test piece in accordance with the method in ISO 179-1, and the notched impact strength at 23°C was measured with an impact strength measuring device (Charpy Auto Impact Tester CHN3 type manufactured by Toyo Seiki Seisaku-sho, Ltd.). The results are shown in Table 9.

In addition, the flexural modulus was measured using a universal testing apparatus (Autograph AG-X plus, manufactured by Shimadzu Corporation) in accordance with the method in ISO-178. The results are shown in Table 9.

**[Table 9]**

| | Mass ratio (mass%) | | | Cylinder temperat ure A (°C) | Cylinder temperat ure B (°C) | Charpy impact resistance strength (kJ/m²) | Flexura 1 modulu s (MPa) |
|---|---|---|---|---|---|---|---|
| | Cellulose acylate | Olefin-glycidyl methacryl ate copolyme r | Adipate ester-containing compound or other plasticizer | | | | |
| Example 50 | CA1=100 | EG 1=2 | AE1=15 | 190 | 200 | 8.9 | 3,250 |
| Example 51 | CA1=100 | EG2=2 | AE1=15 | 190 | 200 | 8.6 | 3,240 |
| Example 52 | CA1=100 | EG3=2 | AE1=15 | 190 | 200 | 12.5 | 3,200 |
| Example 53 | CA1=100 | EG4=2 | AE1=15 | 190 | 200 | 11.8 | 3,300 |
| Example 54 | CA2=100 | EG3=2 | AE1=15 | 180 | 190 | 11.2 | 3,550 |
| Example 55 | CA3=100 | EG3=2 | AE1=15 | 190 | 200 | 12.4 | 3,050 |
| Example 56 | CA4=100 | EG3=2 | AE1=15 | 180 | 190 | 11.0 | 3,550 |
| Example 57 | CA5=100 | EG3=2 | AE1=15 | 210 | 220 | 6.9 | 3,450 |
| Example 58 | CA6=100 | EG3=2 | AE1=15 | 210 | 220 | 6.8 | 3,250 |
| Example 59 | CP1=100 | EG3=2 | AE1=15 | 180 | 190 | 14.5 | 2,880 |
| Example 60 | CA1=100 | EG3=0.5 | AE1=15 | 190 | 200 | 8.6 | 3,750 |
| Example 61 | CA1=100 | EG3=10 | AE1=15 | 180 | 190 | 14.1 | 3,150 |
| Example 62 | CA1=100 | EG3=0.3 | AE1=15 | 190 | 200 | 6.8 | 3,700 |
| Example 63 | CA1=100 | EG3=11 | AE1=15 | 180 | 190 | 14.2 | 2,820 |
| Example 64 | CA1=100 | EG 1=5 | None | 230 | 240 | 6.5 | 5,650 |
| Example 65 | CA1=100 | EG2=5 | None | 230 | 240 | 6.2 | 5,580 |
| Example 66 | CA1=100 | EG3=5 | None | 220 | 230 | 8.8 | 5,250 |
| Example 67 | CA1=100 | EG4=5 | None | 220 | 230 | 7.9 | 5,320 |
| Example 68 | CA7-3=100 | EG3=2 | AE1=15 | 190 | 200 | 8.8 | 3,300 |
| Example 69 | CA1=100 | EG7=2 | AE1=15 | 190 | 200 | 11.0 | 3,100 |
| Example 70 | CA1=100 | EG3=2 | AE2=15 | 190 | 200 | 10.8 | 3,200 |
| Example 71 | CA1=100 | EG3=2 | EE1=15 | 190 | 200 | 8.5 | 2,800 |
| Example 72 | CA1=100 | EG8=2 | AE1=15 | 180 | 190 | 13.5 | 2,800 |
| Comparative Example 17 | CA1=100 | None | AE1=15 | 220 | 230 | 3.5 | 2,850 |
| Comparative Example 18 | CA7-1=100 | EG 1=2 | AE1=15 | 220 | 230 | 6.8 | 2,150 |
| Comparative Example 19 | CA8=100 | EG 1=2 | AE1=15 | 220 | 230 | 6.8 | 2,050 |
| Comparative Example 20 | CA9=100 | EG 1=2 | AE1=15 | 190 | 200 | 2.9 | 3,100 |
| Comparative Example 21 | CA1=100 | EG5=2 | AE1=15 | 210 | 220 | 3.5 | 2,450 |
| Comparative Example 22 | CA1=100 | EG6=2 | AE1=15 | 210 | 220 | 6.9 | 1,950 |
| Comparative Example 7 | Example 1 of JP-A-2014-084343A | | | 220 | 230 | 10.5 | 2,200 |
| Comparative Example 8 | Example 3 of JP-A-2014-084343A | | | 220 | 230 | 6.5 | 2,450 |
| Comparative Example 23 | CA7-2 =100 | EG 1=2 | AE1=15 | 210 | 220 | 6.6 | 2,100 |

From the above results, it is understood that the resin composition of this example can obtain a resin molded article excellent in impact resistance and having a high flexural modulus as compared with the resin composition of the Comparative Example.

### Experimental Example 4

### <Synthesis of Ethylene-alkyl(meth)acrylate Copolymer> (Preparation of EA1 to EA3)

Commercially available ethylene-alkyl(meth)acrylate copolymers, LOTRYL 29 MA 03 (manufactured by Arkema S.A.) was prepared as EA1, LOTLYL 18 MA 02 (manufactured by Arkema S.A.) was prepared as EA2, and LOTLYL 35 BA 320 (manufactured by Arkema S.A.) was prepared as EA3.

### (Synthesis of EA4)

86 parts by mass of an ethylene monomer and 14 parts by mass of a methyl acrylate monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-alkyl(meth)acrylate copolymer (EA4).

### (Synthesis of EA5)

63 parts by mass of an ethylene monomer and 37 parts by mass of an ethyl acrylate monomer were dissolved in tetrahydrofuran, 0.05 parts by mass of azoisobutyronitrile was added thereto, and the mixture was stirred at 40°C for 24 hours and was added dropwise to pure water. The resultant precipitate was filtered and dried to obtain an ethylene-alkyl(meth)acrylate copolymer (EA5).

### (Synthesis of EA6 to EA8 and PA1)

EA6 to EA8 and PA1 were obtained in the same manner as in EA5 with the composition of Table 10.

**[Table 10]**

| | Mass ratio (mass%) | | |
|---|---|---|---|
| | Ethylene | Propylene | Alkyl (meth)acrylate |
| EA1 | 71 | - | MA=29 |
| EA2 | 82 | - | MA=18 |
| EA3 | 65 | - | BA=35 |
| EA4 | 86 | - | MA=14 |
| EA5 | 63 | - | EA=37 |
| EA6 | 75 | - | EA=25 |
| EA7 | 75 | - | n-HA=25 |
| EA8 | 80 | | BA=20 |
| PA1 | - | 71 | MA=29 |

In Table 10, MA represents methyl acrylate, EA represents ethyl acrylate, BA represents n-butyl acrylate, and n-HA represents n-hexyl (meth)acrylate.

### <Preparation of Adipate Ester-containing Compound and Other Plasticizer>

A commercially available adipate ester-containing compound (Daifatty 101 manufactured by DAIHACHI CHEMICAL INDUSTRY CO., LTD) was prepared as Compound AE1, and a commercially available adipate ester-containing compound (Adekasizer RS 107, manufactured by ADEKA Corporation) was prepared as Compound AE2. In addition, as a plasticizer (another plasticizer) other than the adipate ester-containing compound, a polyether ester (Adekasizer RS-1000, manufactured by ADEKA Corporation) was prepared as EE-1.

### <Evaluation on Impact Resistance Strength and Flexural Modulus>

With the charged composition ratio shown in Table 11, kneading was performed with a twin-screw kneader (TEX 41SS, manufactured by TOSHIBA MACHINE CO., LTD.) at a cylinder temperature A, so as to obtain a resin composition (pellets).

With respect to Comparative Examples 7 and 8, kneading was performed with the composition of Example 1 or 3 described in JP-A-2014-084343, so as to obtain pellets.

Specifically, in Comparative Example 7, 25 parts by mass of an adipate ester-containing compound (Daifatty 101 manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

In Comparative Example 8, 25 parts by mass of triphenyl phosphate (manufactured by DAIHACHI CHEMICAL INDUSTRY CO., LTD.) and 14 parts by mass of Paraloid (registered trademark) EXL-2602 (a core/shell graft copolymer containing a butadiene-methyl methacrylate copolymer) manufactured by Rohm and Haas Company were used based on 100 parts by mass of the cellulose acetate CA7-1 (L50, manufactured by Daicel Corporation).

With respect to the obtained pellets, an ISO multipurpose dumbbell (dimensions of the measuring part: width 100 mm × thickness 40 mm) was molded using an injection molding machine (NEX 140III manufactured by NISSEI PLASTIC INDUSTRIAL CO., LTD.) at a cylinder temperature B at which the injection peak pressure does not exceed 180 MPa.

The cylinder temperatures A and B are shown in Table 11.

The obtained ISO multipurpose dumbbell test piece was processed into a notched impact test piece in accordance with the method in ISO 179-1, and the notched impact strength at 23°C was measured with an impact strength measuring device (Charpy Auto Impact Tester CHN3 type manufactured by Toyo Seiki Seisaku-sho, Ltd.). The results are shown in Table 11.

In addition, the flexural modulus was measured using a universal testing apparatus (Autograph AG-X plus, manufactured by Shimadzu Corporation) in accordance with the method in ISO-178. The results are shown in Table 11.

**[Table 11]**

| | Mass ratio (mass%) | | | Cylinder temperatu re A (°C) | Cylinder temperatu re B (°C) | Charpy impact resistance strength (kJ/m²) | Flexural modulu s (MPa) |
|---|---|---|---|---|---|---|---|
| | Cellulose acylate | Olefin-alkyl(meth) acrylate copolymer | Adipate ester-containing compound or other plasticizer | | | | |
| Example 73 | CA1=100 | EA1=2 | AE1=15 | 190 | 200 | 12.8 | 3,150 |
| Example 74 | CA1=100 | EA2=2 | AE1=15 | 190 | 200 | 11.5 | 3,260 |
| Example 75 | CA1=100 | EA3=2 | AE1=15 | 180 | 190 | 15.2 | 2,850 |
| Example 76 | CA2=100 | EA1=2 | AE1=15 | 180 | 190 | 10.5 | 3,280 |
| Example 77 | CA3=100 | EA1=2 | AE1=15 | 190 | 200 | 13.5 | 3,080 |
| Example 78 | CA4=100 | EA1=2 | AE1=15 | 180 | 190 | 10.2 | 3,300 |
| Example 79 | CA5=100 | EA1=2 | AE1=15 | 210 | 220 | 8.6 | 3,300 |
| Example 80 | CA6=100 | EA1=2 | AE1=15 | 210 | 220 | 8.4 | 3,320 |
| Example 81 | CP1=100 | EA1=2 | AE1=15 | 180 | 190 | 16.5 | 2,650 |
| Example 82 | CA1=100 | EA1=0.5 | AE1=15 | 190 | 200 | 10.1 | 3,450 |
| Example 83 | CA1=100 | EA1=10 | AE1=15 | 180 | 190 | 14.5 | 2,950 |
| Example 84 | CA1=100 | EA1=0.3 | AE1=15 | 190 | 200 | 8.7 | 3,480 |
| Example 85 | CA1=100 | EA1=11 | AE1=15 | 180 | 190 | 16.8 | 2,650 |
| Example 86 | CA1 = 100 | EA1=5 | None | 230 | 240 | 8.8 | 5,650 |
| Example 87 | CA1=100 | EA2=5 | None | 230 | 240 | 8.2 | 5,800 |
| Example 88 | CA1=100 | EA3=5 | None | 230 | 240 | 8.7 | 5,450 |
| Example 89 | CA1=100 | EA6=2 | AE1=15 | 190 | 200 | 11.2 | 3,150 |
| Example 90 | CA1=100 | EA7=2 | AE1=15 | 190 | 200 | 11 | 3,250 |
| Example 91 | CA1=100 | EA8=2 | AE1=15 | 190 | 200 | 11.8 | 3,200 |
| Example 92 | CA1=100 | PA1=2 | AE1=15 | 190 | 200 | 12.9 | 3,100 |
| Example 93 | CA1=100 | EA1=2 | AE2=15 | 190 | 200 | 11 | 3,000 |
| Example 94 | CA1=100 | EA1=2 | EE1=15 | 200 | 210 | 8.5 | 2,900 |
| Example 95 | CA7-3 =100 | EA1=2 | AE1=15 | 190 | 200 | 12.6 | 3,250 |
| Comparative Example 28 | CA1=100 | None | AE1=15 | 220 | 230 | 3.5 | 2,850 |
| Comparative Example 29 | CA7-1 =100 | EA1=2 | AE1=15 | 230 | 240 | 3.5 | 2,950 |
| Comparative Example 30 | CA7-2 =100 | EA1=2 | AE1=15 | 220 | 230 | 3.2 | 2,800 |
| Comparative Example 31 | CA8=100 | EA1=2 | AE1=15 | 230 | 240 | 2.8 | 2,800 |
| Comparative Example 32 | CA9=100 | EA1=2 | AE1=15 | 210 | 220 | 6.8 | 1,650 |
| Comparative Example 33 | CA1=100 | EA4=2 | AE1=15 | 200 | 210 | 3.7 | 2,550 |
| Comparative Example 34 | CA1=100 | EA5=2 | AE1=15 | 190 | 200 | 8.5 | 1,900 |
| Comparative Example 7 | Example 1 of JP-A-2014-084343A | | | 220 | 230 | 10.5 | 2,200 |
| Comparative Example 8 | Example 3 of JP-A-2014-084343A | | | 220 | 230 | 6.5 | 2,450 |

From the above results, it is understood that the resin composition of this example can obtain a resin molded article excellent in impact resistance and having a high flexural modulus as compared with the resin composition of the Comparative Example.

This application is based on Japanese patent application filed on August 31, 2016 (Japanese Patent Application No. 2016-170158), Japanese patent application filed on August 31, 2016 (Japanese Patent Application No. 2016-170159), Japanese patent application filed on August 31, 2016 (Japanese Patent Application No. 2016-170160), and Japanese patent application filed on August 31, 2016 (Japanese Patent Application No. 2016-170161).

## Claims

1. A resin composition comprising:
cellulose acylate having a weight average molecular weight of 30,000 to 90,000; and
an olefin-(meth)acrylate-glycidyl methacrylate copolymer, wherein
a mass ratio Ma/Mb of a content Ma of a structural unit represented by the following formula (a) to a content Mb of a structural unit represented by the following formula (b) contained in the copolymer is 5 to 10: 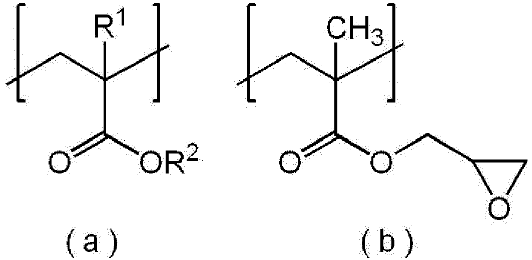
wherein, in the formulae, R¹ represents a hydrogen atom or a methyl group, and R² represents an alkyl group having 1 to 10 carbon atoms.

2. The resin composition according to claim 1,
wherein the olefin-(meth)acrylate-glycidyl methacrylate copolymer is an ethylene-(meth)acrylate-glycidyl methacrylate copolymer.

3. The resin composition according to claim 1,
wherein the cellulose acylate has a degree of substitution of 2.0 to 2.5.

4. The resin composition according to claim 1,
wherein the cellulose acylate has at least an acetyl group.

5. The resin composition according to claim 1,
wherein a content of the copolymer may be 0.5 part by mass to 10 parts by mass based on 100 parts by mass of the cellulose acylate.

6. The resin composition according to claim 1, further comprising an adipate ester-containing compound.

7. A resin molded article obtained by molding the resin composition according to claim 1.

8. A resin molded article, comprising:
a resin obtained by reacting cellulose acylate having a weight average molecular weight of 30,000 to 90,000; and
an olefin-(meth)acrylate-glycidyl methacrylate copolymer,
wherein a mass ratio Ma/Mb of a content Ma of a structural unit represented by the following formula (a) to a content Mb of a structural unit represented by the following formula (b) contained in the copolymer is 5 to 10: 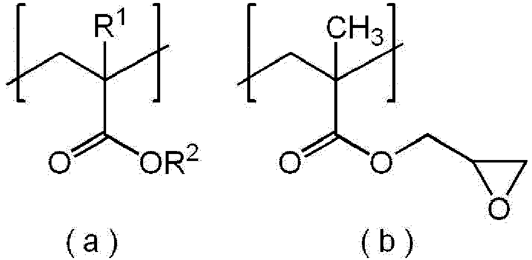 wherein, in the formula,
R¹ represents a hydrogen atom or a methyl group, and
R² represents an alkyl group having 1 to 10 carbon atoms.

9. The resin molded article according to claim 8,
wherein the olefin-(meth)acrylate-glycidyl methacrylate copolymer is an ethylene-(meth)acrylate-glycidyl methacrylate copolymer.

## Patentansprüche

1. Harzzusammensetzung, umfassend:
Celluloseacylat, das ein gewichtsmittleres Molekulargewicht von 30.000 bis 90.000 aufweist; und
ein Olefin-(Meth)acrylat-Glycidylmethacrylat-Copolymer, wobei ein Massenverhältnis Ma/Mb eines Gehalts Ma einer Struktureinheit, die durch die folgende Formel (a) dargestellt wird, zu einem Gehalt Mb einer Struktureinheit, die durch die folgende Formel (b) dargestellt wird, die im Copolymer enthalten ist, 5 bis 10 beträgt: 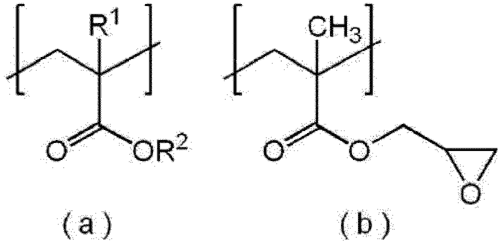
wobei in den Formeln R¹ ein Wasserstoffatom oder eine Methylgruppe darstellt und R² eine Alkylgruppe darstellt, die 1 bis 10 Kohlenstoffatome aufweist.

2. Harzzusammensetzung nach Anspruch 1,
wobei das Olefin-(Meth)acrylat-Glycidylmethacrylat-Copolymer ein Ethylen-(Meth)acrylat-Glycidylmethacrylat-Copolymer ist.

3. Harzzusammensetzung nach Anspruch 1,
wobei das Celluloseacylat einen Substitutionsgrad von 2,0 bis 2,5 aufweist.

4. Harzzusammensetzung nach Anspruch 1,
wobei das Celluloseacylat mindestens eine Acetylgruppe aufweist.

5. Harzzusammensetzung nach Anspruch 1,
wobei der Gehalt des Copolymers 0,5 Massenteile bis 10 Massenteile basierend auf 100 Massenteilen des Celluloseacylats betragen kann.

6. Harzzusammensetzung nach Anspruch 1, die ferner eine Adipatester-enthaltende Verbindung umfasst.

7. Formartikel aus Harz, der durch Formen der Harzzusammensetzung nach Anspruch 1 erhalten wird.

8. Formartikel aus Harz, umfassend:
ein Harz, das durch Reaktion von Celluloseacylat erhalten wird, das ein gewichtsmittleres Molekulargewicht von 30.000 bis 90.000 aufweist; und
ein Olefin-(Meth)acrylat-Glycidylmethacrylat-Copolymer,
wobei ein Massenverhältnis Ma/Mb eines Gehalts Ma einer Struktureinheit, die durch die folgende Formel (a) dargestellt wird, zu einem Gehalt Mb einer Struktureinheit, die durch die folgende Formel (b) dargestellt wird, die im Copolymer enthalten ist, 5 bis 10 beträgt: 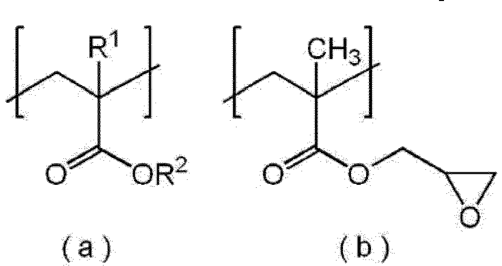 wobei, in der Formel,
R¹ ein Wasserstoffatom oder eine Methylgruppe darstellt und
R² eine Alkylgruppe darstellt, die 1 bis 10 Kohlenstoffatome aufweist.

9. Formartikel aus Harz nach Anspruch 8,
wobei das Olefin-(Meth)acrylat-Glycidylmethacrylat-Copolymer ein Ethylen-(Meth)acrylat-Glycidylmethacrylat-Copolymer ist.

## Revendications

1. Composition de résine comprenant :
de l'acylate de cellulose ayant un poids moléculaire moyen en poids de 30 000 à 90 000 ; et
un copolymère d'oléfine-(méth)acrylate-méthacrylate de glycidyle, dans laquelle
un rapport massique Ma/Mb entre une teneur Ma d'une unité structurelle représentée par la formule suivante (a) et une teneur Mb d'une unité structurelle représentée par la formule suivante (b) contenue dans le copolymère est de 5 à 10 : 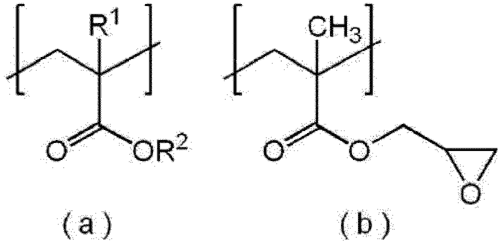
dans laquelle, dans les formules, R¹ représente un atome d'hydrogène ou un groupe méthyle, et R² représente un groupe alkyle ayant 1 à 10 atomes de carbone.

2. Composition de résine selon la revendication 1,
dans laquelle le copolymère d'oléfine-(méth)acrylate-méthacrylate de glycidyle est un copolymère éthylène(méth)acrylate-méthacrylate de glycidyle.

3. Composition de résine selon la revendication 1,
dans laquelle l'acylate de cellulose a un degré de substitution de 2,0 à 2,5.

4. Composition de résine selon la revendication 1,
dans laquelle l'acylate de cellulose possède au moins un groupe acétyle.

5. Composition de résine selon la revendication 1,
dans laquelle une teneur en copolymère peut être de 0,5 partie en masse à 10 parties en masse sur la base de 100 parties en masse de l'acylate de cellulose.

6. Composition de résine selon la revendication 1, comprenant en outre un composé contenant un ester d'adipate.

7. Article moulé en résine obtenu par moulage de la composition de résine selon la revendication 1.

8. Article moulé en résine, comprenant :
une résine obtenue par réaction d'acylate de cellulose ayant un poids moléculaire moyen en poids de 30 000 à 90 000 ; et
un copolymère d'oléfine-(méth)acrylate-méthacrylate de glycidyle,
dans lequel un rapport massique Ma/Mb entre une teneur Ma d'une unité structurelle représentée par la formule suivante (a) et une teneur Mb d'une unité structurelle représentée par la formule suivante (b) contenue dans le copolymère est de 5 à 10 : 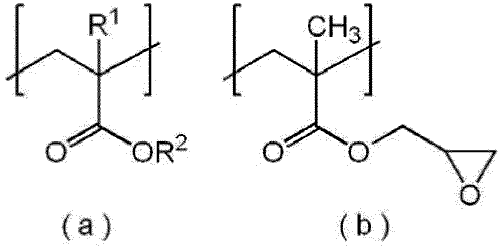 dans lequel, dans la formule,
R¹ représente un atome d'hydrogène ou un groupe méthyle, et
R² représente un groupe alkyle ayant 1 à 10 atomes de carbone.

9. Article moulé en résine selon la revendication 8,
dans lequel le copolymère d'oléfine-(méth)acrylate-méthacrylate de glycidyle est un copolymère d'éthylène-(méth)acrylate-méthacrylate de glycidyle.
